# EUROPEAN PATENT APPLICATION

(11) **EP 4 322 518 A1**
(43) Date of publication of application: **14.02.2024**
(21) Application number: 22794730.6
(22) Date of filing: 21.04.2022
(51) Int. Cl.: H04N 5/232

(54) **TARGET TRACKING METHOD AND RELATED APPARATUS**

(30) Priority: 30.04.2021 CN 202110486512
(71) Applicant: Huawei Technologies Co., Ltd., Shenzhen, Guangdong 518129 (CN)
(72) Inventor: ZHANG, Liyao, Shenzhen, Guangdong 518129 (CN); HUANG, Yalin, Shenzhen, Guangdong 518129 (CN); LIU, Meng, Shenzhen, Guangdong 518129 (CN); ZHANG, Chao, Shenzhen, Guangdong 518129 (CN)
(74) Representative: Maiwald GmbH
(86) International application number: PCT/CN2022/088093
(87) International publication number: WO 2022/228259

(57) **Abstract**

A target tracking method is disclosed. The method includes: An electronic device enables a target tracking mode. The electronic device determines a to-be-tracked target subject based on a raw image captured by a camera of the electronic device. The electronic device displays a first tracking picture in a display area. The first tracking picture includes the target subject, and the target subject is located at a first position in a viewfinder area of the camera. When the target subject moves, the electronic device displays a second tracking picture in the display area. The second tracking picture displays the fact that the target subject is located at a second position of the viewfinder area of the camera. Herein, the raw image captured by the camera means all image data that can be captured by the camera. In embodiments of this application, the target subject is tracked based on an image range of the raw image, so that a larger tracking range is implemented.

## Description

This application claims priority to Chinese Patent Application No. 202110486512.3, filed with the China National Intellectual Property Administration on April 30, 2021 and entitled "TARGET TRACKING METHOD AND RELATED APPARATUS", which is incorporated herein by reference in its entirety.

### TECHNICAL FIELD

This application relates to the field of electronic technologies, and in particular, to a target tracking method and a related apparatus.

### BACKGROUND

When a mobile phone shoots a moving subject with a telephoto lens, it is difficult to focus on the moving subject in handheld shooting. If a user moves the mobile phone to follow the movement of the moving subject, it is difficult to follow the moving subject, and a picture jitters. Especially in a preview scenario, not similar to an offline program, an electronic device cannot cache all video image information and provide an optimal (taking both tracking and stability into account) output box position of a current frame by using an image frame motion path of a future frame.

Therefore, how to ensure that a cropping box for a real-time output can frame a moving subject well and ensure continuity and stability of an output image stream is a problem being studied by persons skilled in the art.

### SUMMARY

Embodiments of this application provide a target tracking method and a related apparatus, to stably track a target subject.

According to a first aspect, this application provides a target tracking method. The method includes: An electronic device enables a target tracking mode. The electronic device determines a to-be-tracked target subject based on a raw image captured by a camera of the electronic device. The electronic device displays a first tracking picture in a display area. The first tracking picture includes the target subject, and the target subject is located at a first position in a viewfinder area of the camera. When the target subject moves, the electronic device displays a second tracking picture in the display area. The second tracking picture displays the fact that the target subject is located at a second position of the viewfinder area of the camera.

In this embodiment of this application, the electronic device may perform target tracking on the captured raw image. After the electronic device determines the target subject in the raw image, when the target subject moves from the first position to the second position, the target subject is always displayed in a picture in the display area of the electronic device. Herein, the raw image captured by the camera means all image data that can be captured by the camera. In this embodiment of this application, the target subject is tracked based on an image range of the raw image, so that a larger tracking range is implemented.

In a possible implementation, the electronic device does not move, and the viewfinder area of the camera does not change. In this embodiment of this application, tracking the target subject may be tracking a moving target subject when the electronic device does not move. In this way, stability of displaying the target subject in an output picture can be improved. In this embodiment of this application, when the electronic device moves, a moving target subject may alternatively be tracked, and the target subject is always displayed in an output picture. Alternatively, when the electronic device moves, a target subject that does not move is tracked, and the target subject is always displayed in an output picture.

In a possible implementation, image stabilization or deblurring processing is not performed on the raw image, or the raw image includes all objects in the viewfinder area of the camera. In this embodiment of this application, the target subject is tracked based on the image range of the raw image, so that a larger tracking range is implemented. When the target subject is located in an edge area of the raw image, the electronic device may also track the target subject.

In a possible implementation, the method further includes: The electronic device displays, in a preview box, the raw image captured by the camera. The preview box occupies a part or all of the display area. The preview box may be a picture-in-picture box, and is superimposed and displayed in the display area, so that a user can more intuitively view a comparison between the raw image and a tracking picture in the display area. The preview box may alternatively occupy all pictures of the display area. For example, the preview box is first displayed in all pictures of the display area, and then the preview box is superimposed and displayed in the display area.

In a possible implementation, that the electronic device determines a to-be-tracked target subject based on a raw image captured by a camera of the electronic device includes: The electronic device receives a first operation performed by the user in the preview box. The first operation indicates the target subject selected by the user. The electronic device determines the to-be-tracked target subject based on the first operation. If the raw image captured by the camera is displayed in the preview box, the image displayed in the preview box includes the target subject. The electronic device may determine the target subject based on the first operation performed by the user on the preview box. The first operation may be, for example, a tap operation performed on a display position of the target subject. That is, the electronic device may determine the target subject based on a user operation.

In a possible implementation, that the electronic device determines a to-be-tracked target subject based on a raw image captured by a camera of the electronic device includes: The electronic device performs, according to a preset target detection algorithm, automatic target detection on the raw image captured by the camera of the electronic device, to determine the to-be-tracked target subject. The preset target detection algorithm may be for a specific type of object, for example, a target detection algorithm for detecting a person, a target detection algorithm for detecting an animal, a target detection algorithm for detecting an object, a target detection algorithm for detecting a moving object, or the like.

In a possible implementation, the preview box further includes an output box, and an image in the output box corresponds to a picture displayed in the display area. The output box indicates a specific area, of the raw image, in which a picture displayed in a current display area is located.

In a possible implementation, the method further includes: The electronic device determines a guide point in the output box. The guide point indicates a display position of the target subject. The electronic device displays, based on the guide point, the target subject at the first position in the first tracking picture or the target subject at the second position in the second tracking picture. The guide point is used to determine a display position of the target subject in the output box. If the guide point is at a center point of the output box, in the first tracking picture, the target subject is displayed at a center position of the first tracking picture, and in the second tracking picture, the target subject is displayed at a center position of the second tracking picture. In this way, the electronic device can enable the target subject to be stably displayed at a position of the guide point, to implement an effect of stable tracking.

In a possible implementation, that the electronic device determines a guide point in the output box includes: The electronic device determines the guide point in the output box according to a default setting, or the electronic device receives a second operation of the user. The second operation of the user indicates a position, in the output box, of the guide point selected by the user. A manner in which the electronic device may determine the guide point by using a default setting and a user operation is provided herein.

In a possible implementation, that the electronic device displays, based on the guide point, the target subject at the first position in the first tracking picture or the target subject at the second position in the second tracking picture includes: The electronic device determines a motion path of the target subject. The electronic device determines a polyline of a difference between the target subject and the guide point based on the motion path of the target subject. The electronic device determines a motion path of a background in the raw image. The electronic device determines a smooth path based on the motion path of the background and the difference polyline. The electronic device warps the raw image based on the smooth path. The electronic device displays a warped image in the display area. A picture displayed in the display area corresponds to an image in the output box. An algorithm principle for the electronic device to implement stable tracking of the target subject is described herein. Based on a concept of a foreground driving the background, the electronic device drives a background motion by using a motion of the target subject, so that the target subject moves to an output picture. In a process of solving the smooth path of the background, the electronic device determines a polyline of a difference between the motion path of the target subject and the guide point, and uses the difference polyline as a guide reference item for smoothing the background, to obtain the smooth path of the background. The raw image captured by the electronic device is warped based on the smooth path, so that the target subject can be stably displayed at the position of the guide point in the output box. One-time solution performed by the electronic device on the smooth path of the background takes both image stabilization smoothing and tracking into account, so that tracking of the target subject and path smoothing of the background share a same widest cropping boundary (that is, a boundary of the raw image). This implements tracking of the target subject and smoothing of the background, and takes followability and smoothness of a tracking result into account.

In a possible implementation, that an electronic device enables a target tracking mode includes: The electronic device detects a third operation of the user. The third operation includes an operation of increasing a zoom ratio or an operation that the user directly turns on a target tracking mode switch. A manner in which the electronic device enables the target tracking mode based on a user operation is provided herein.

In a possible implementation, the operation of increasing a zoom ratio indicates a display ratio selected by the user, and the electronic device displays the first tracking picture or the second tracking picture in the display area based on the display ratio.

In a possible implementation, the camera is a telephoto camera. Generally, at a high display ratio, the electronic device captures image data by using a telephoto camera.

In a possible implementation, an increased zoom ratio is greater than a preset ratio. The preset ratio may be, for example, 15X.

In a possible implementation, when the second position is an edge position of the viewfinder area of the camera, the second tracking picture includes the target subject. One-time solution performed by the electronic device on the smooth path of the background takes both image stabilization smoothing and tracking into account, so that tracking of the target subject and path smoothing of the background share a same widest cropping boundary (that is, a boundary of the raw image). In this way, even if the target subject is located at an edge position in the raw image, the electronic device can also track the target subject. This resolves a problem that because the target subject is located at an edge of an image shooting area of the electronic device, the electronic device cannot track the target subject even if an image of the target subject is captured.

According to a second aspect, an embodiment of this application provides an electronic device, including one or more processors and one or more memories. The one or more memories are coupled to the one or more processors, the one or more memories are configured to store computer program code, the computer program code includes computer instructions, and when the computer instructions are run on the processor, the electronic device is enabled to perform the target tracking method in any one of the possible implementations of the foregoing aspect.

According to a third aspect, an embodiment of this application provides a computer storage medium, including computer instructions. When the computer instructions are run on an electronic device, a communication apparatus is enabled to perform the target tracking method in any one of the possible implementations of the foregoing aspect.

According to a fourth aspect, an embodiment of this application provides a target tracking method. The method includes: starting target tracking; capturing a raw image; determining a to-be-tracked target subject based on the raw image; outputting information about a first tracking picture, where the first tracking picture includes the target subject, and the target subject is located at a first position of a viewfinder area; and outputting information about a second tracking picture, where the second tracking picture displays the fact that the target subj ect is located at a second position of the viewfinder area.

According to a fifth aspect, an embodiment of this application provides a camera module, including an input unit, an output unit, and at least one camera.

The input unit is configured to start target tracking based on an indication of an electronic device.

The at least one camera is configured to: capture a raw image, and determine a to-be-tracked target subject based on the raw image.

The output unit is configured to: output information about a first tracking picture, where the first tracking picture includes the target subject, and the target subject is located at a first position of a viewfinder area; and output information about a second tracking picture, where the second tracking picture displays the fact that the target subject is located at a second position of the viewfinder area.

In some implementations, the at least one camera includes a processing unit. The at least one camera is further configured to determine a motion path of the target subject by using the processing unit. The at least one camera is further configured to determine a polyline of a difference between the target subject and a guide point by using the processing unit based on the motion path of the target subject. The at least one camera is further configured to determine a motion path of a background in the raw image by using the processing unit. The at least one camera is further configured to determine a smooth path by using the processing unit based on the motion path of the background and the difference polyline. The at least one camera is further configured to warp the raw image by using the processing unit based on the smooth path. The output unit is further configured to output a warped image in a display area. A picture displayed in the display area corresponds to an image in an output box.

According to a sixth aspect, an embodiment of this application provides a computer program product. When the computer program product runs on a computer, the computer is enabled to perform the target tracking method in any one of the possible implementations of the foregoing aspects.

### BRIEF DESCRIPTION OF DRAWINGS

FIG. 1a and FIG. 1b are schematic diagrams of a principle of a target tracking method according to an embodiment of this application;
FIG. 2 is a schematic diagram of a structure of an electronic device according to an embodiment of this application;
FIG. 3a and FIG. 3b are schematic diagrams of a group of application interfaces according to an embodiment of this application;
FIG. 4a to FIG. 4f are schematic diagrams of another group of application interfaces according to an embodiment of this application;
FIG. 5a and FIG. 5b are schematic diagrams of still another group of application interfaces according to an embodiment of this application;
FIG. 6a and FIG. 6b are schematic diagrams of yet another group of application interfaces according to an embodiment of this application;
FIG. 7a to FIG. 7d are schematic diagrams of still yet another group of application interfaces according to an embodiment of this application;
FIG. 8a to FIG. 8d are schematic diagrams of a further group of application interfaces according to an embodiment of this application;
FIG. 9 is a method flowchart of a target tracking method according to an embodiment of this application;
FIG. 10 is a schematic diagram of a principle of another target tracking method according to an embodiment of this application;
FIG. 11 is a schematic diagram of a principle of still another target tracking method according to an embodiment of this application;
FIG. 12a and FIG. 12b are schematic diagrams of a principle of yet another target tracking method according to an embodiment of this application;
FIG. 13 is a method flowchart of another target tracking method according to an embodiment of this application; and
FIG. 14 is a method flowchart of still another target tracking method according to an embodiment of this application.

### DESCRIPTION OF EMBODIMENTS

The following describes technical solutions in embodiments of this application with reference to accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two. Directions or position relationships indicated by terms "middle", "left", "right", "upper", "lower", and the like are directions or position relationships that are shown based on the accompanying drawings, and are merely used to describe this application easily and simplify the description, rather than indicate or imply that an indicated apparatus or component needs to have a specific orientation or needs to be constructed and operated in the specific orientation, and therefore cannot be understood as a limitation on this application.

In embodiments of this application, image stabilization and tracking are two technologies for stably tracking an object in an image captured in real time. Image stabilization is to crop a captured image based on a target point or a target area, so that the target point or the target area always moves smoothly in a specific area of a picture, and therefore a displayed picture is stable. Tracking is to determine, by using an algorithm such as subject detection and recognition or feature matching, a target subject in an image captured in real time. To facilitate presentation, the captured image may be cropped, so that the target subject is displayed in an output picture (for example, at a center position).

Image stabilization and tracking are separate algorithms. If tracking is implemented before image stabilization is implemented, slight hand trembling is magnified as a huge jump of a preview picture at a high ratio. Therefore, if a subject detection algorithm is executed on a raw input image without performing image stabilization, accuracy of detecting the target subject is greatly reduced, and it is difficult to accurately identify a same subject on a previous frame and a next frame based on a position in the raw input image.

If image stabilization is implemented before tracking is implemented, the subject detection algorithm is executed on an image on which image stabilization is performed. This can improve detection accuracy. However, because the raw input image is cropped during image stabilization, detection and a movable range of tracking are limited, and it is difficult to use a larger boundary of the raw input image. In addition, after secondary cropping of tracking, a path of the target subject becomes unsmooth again due to a cropping box jump, and secondary smoothing is required. This causes more wave peak hysteresis, and a delay is caused.

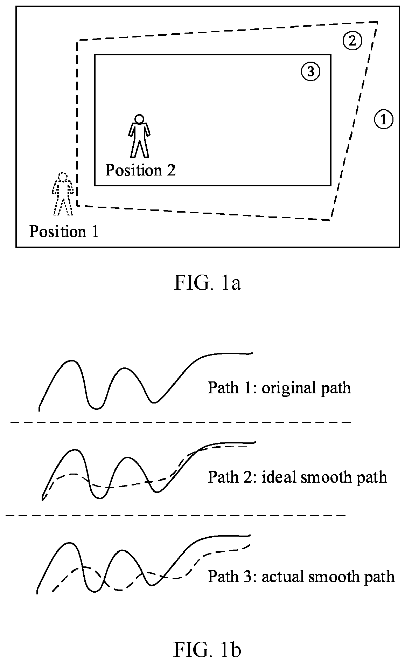

As shown in FIG. 1a, an outermost image box ① shows a raw image captured by an electronic device 100 by using a camera. Because the electronic device 100 mostly does not directly shoot a photographed object when capturing an image, the electronic device 100 needs to first perform image warping (image warping) on the captured raw image, to make the image flat. For example, a camera of the electronic device 100 captures a QR code image in a side direction, and the electronic device 100 first needs to perform warping transformation on the captured QR code image, to obtain a QR code image in a forward direction, so as to identify the QR code.

In FIG. 1a, a dashed-line box ② shows an image obtained by performing warping transformation on a raw image by the electronic device 100. The electronic device 100 performs image stabilization processing on the warped image, and finally, an image box obtained through image stabilization cropping is an image box ③ in FIG. 1a. It can be learned that, after the electronic device 100 performs image stabilization processing on the raw image, an image range that can be used to perform tracking processing becomes a range shown in the image box ③. When the target subject is at a position 1, even if the electronic device 100 captures an image of a target subject, the target subject cannot be tracked. That is, the image range becomes smaller after image stabilization. As a result, the target subject visible on the raw image cannot be tracked, and the electronic device 100 can track the target subject only when the target subject is at a position 2. It can be learned that, the electronic device 100 cannot use a larger range provided by the raw image when tracking and detecting the target subject.

In addition, when the electronic device 100 tracks the target subject, an area in which the target subject is located needs to be further cropped. Because a position deviation generally exists in subject identification of different image frames, jitter occurs in the cropped area. To prevent adjacent image frames after cropping from jumping due to different cropping areas, secondary image stabilization and smoothing need to be performed on a cropped image. As shown in FIG. 1b, a path 1 is a motion path of a displayed image after secondary cropping relative to the raw image, a path 2 is an ideal image stabilization smooth path of the displayed image after secondary cropping, and a path 3 is an actual image stabilization smooth path of the displayed image after secondary cropping. It can be learned that, actually, such a processing manner causes wave peak hysteresis, an image display delay, and poor user experience.

Embodiments of this application provide a path optimization-based target tracking method. Based on a concept of a foreground driving a background, the electronic device 100 drives a background motion by using a motion of a target subject (the foreground), so that the target subject moves to an output picture. In a process of solving a smooth path of the background, the electronic device 100 uses a motion path of the target subject as a guide reference item for smoothing the background, to obtain the smooth path of the background. The electronic device 100 warps, based on the smooth path, a raw image captured by the electronic device, so that the target subject can be stably displayed in the output picture. One-time solution performed by the electronic device 100 on the smooth path of the background takes both image stabilization smoothing and tracking into account, so that tracking of the target subject and path smoothing of the background share a same widest cropping boundary (that is, a boundary of the raw image). This implements tracking of the target subject and smoothing of the background, and takes followability and smoothness of a tracking result into account.

In embodiments of this application, target tracking may be performed on image data captured in real time. Tracking may be tracking a moving object when an image shooting device does not move, and the moving object is always displayed in an output picture. Alternatively, when an image shooting device moves, a moving object may be tracked, and the moving object is always displayed in an output picture. Alternatively, when an image shooting device moves, a non-moving object may be tracked, and the non-moving object is always displayed in an output picture. For example, on a preview interface of Camera, a target subject may be tracked in real time without moving an image shooting device, to obtain an image or a video including the target subject.

The following first describes the electronic device 100 in embodiments of this application. The electronic device 100 includes an image shooting device.

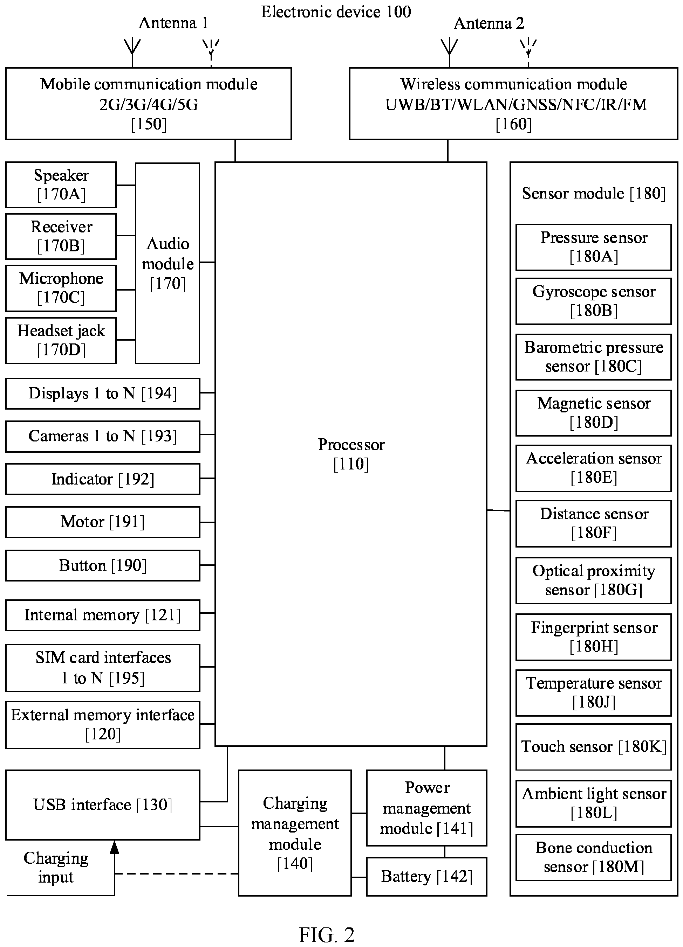

FIG. 2 is a schematic diagram of a structure of an example of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In some embodiments of this application, the display 194 displays interface content currently output by a system. For example, the interface content is a preview interface provided by Camera. The preview interface may display an image captured by the camera 193 in real time, or the preview interface may display an image that is captured by the camera 193 in real time and that is processed by the GPU.

The electronic device 100 may implement an image shooting function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

In some embodiments, the camera 193 may include a telephoto camera, a wide-angle camera, an ultra-wide-angle camera, or the like. The electronic device 100 captures an image in real time by using the camera 193, and may use different cameras at different zoom ratios to capture an image. For example, at a zoom ratio of 0.5X to 1X, an ultra-wide-angle camera may be used, a raw image captured by the ultra-wide-angle camera is an image at a zoom ratio of 0.5X, and a displayed image at the zoom ratio of 0.5X to 1X is obtained by cropping the raw image (the image at the zoom ratio of 0.5X). At a zoom ratio of 1X to 3.5X, a wide-angle camera may be used, a raw image captured by the wide-angle camera is an image at a zoom ratio of 1X, and a displayed image at the zoom ratio of 1X to 3.5X is obtained by cropping the raw image (the image at the zoom ratio of 1X). At a zoom ratio of 3.5X or higher, a telephoto camera may be used, a raw image captured by the telephoto camera is an image at a zoom ratio of 3.5X, and a displayed image at the zoom ratio of 3.5X or higher is obtained by cropping the raw image (the image at the zoom ratio of 3.5X).

Optionally, regardless of whether the telephoto camera, the wide-angle camera, or the ultra-wide-angle camera is used, the electronic device 100 may obtain a displayed image at any zoom ratio by cropping a raw image.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and can convert the pressure signal into an electrical signal.

The gyroscope sensor 180B may be configured to determine a motion posture of the electronic device 100. In some embodiments, an angular velocity of the electronic device 100 around three axes (namely, axes x, y, and z of the electronic device) may be determined through the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure.

The magnetic sensor 180D includes a Hall sensor.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer. In some optional embodiments of this application, the acceleration sensor 180E may be configured to capture an acceleration value generated when a finger part of a user touches the display (or a finger of the user taps a rear side bezel of a rear cover of the electronic device 100), and transmit the acceleration value to the processor, so that the processor identifies a finger part through which the user enters a user operation.

The distance sensor 180F is configured to measure a distance. The electronic device 100 may measure the distance in an infrared manner or a laser manner. In some embodiments, in an image shooting scenario, the electronic device 100 may measure a distance through the distance sensor 180F to implement quick focusing.

The optical proximity sensor 180G may include, for example, a light emitting diode (LED) and an optical detector, for example, a photodiode.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194. A touchscreen formed by the touch sensor 180K and the display 194 is also referred to as a "touch screen".

The bone conduction sensor 180M may obtain a vibration signal.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device 100.

With reference to an application scenario, the following describes an implementation of a target tracking method provided in this application on a display interface of the electronic device 100.

First, a display interface on which the electronic device 100 enables a target tracking function is described.

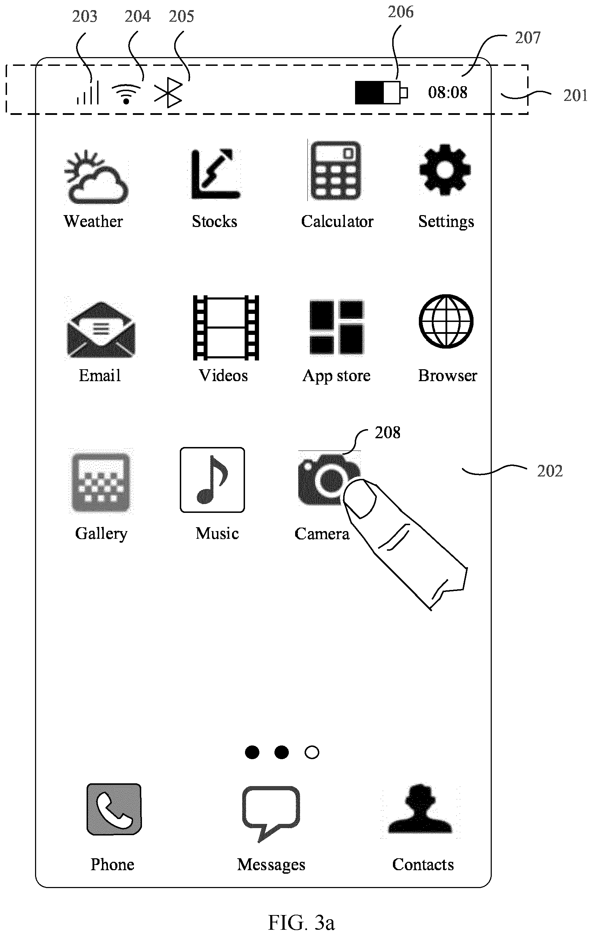

FIG. 3a shows an example of a user interface for displaying a list of applications on an electronic device. FIG. 3a includes a status bar 201 and a display interface 202. The status bar 201 may include one or more signal strength indicators 203 of a mobile communication signal (which may also be referred to as a cellular signal), one or more signal strength indicators 204 of a wireless fidelity (wireless fidelity, Wi-Fi) signal, a Bluetooth indicator 205, a battery status indicator 206, and a time indicator 207. When a Bluetooth module of the electronic device is in an enabled state (that is, the electronic device supplies power to the Bluetooth module), the Bluetooth indicator 205 is displayed on the display interface of the electronic device.

The display interface 202 displays a plurality of application icons. The display interface 202 includes an application icon of Camera 208. When the electronic device detects a user operation performed on the application icon of Camera 208, the electronic device displays an application interface provided by Camera.

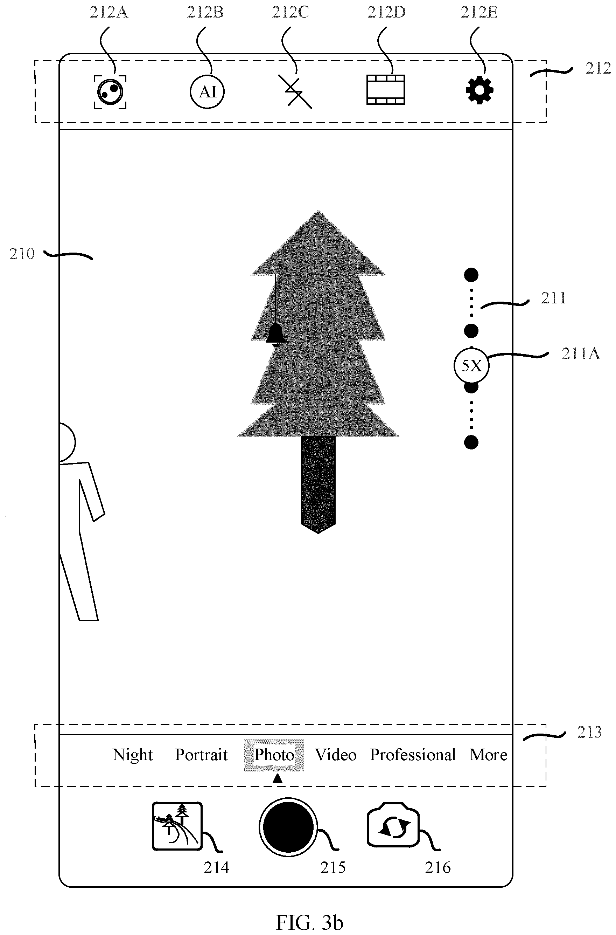

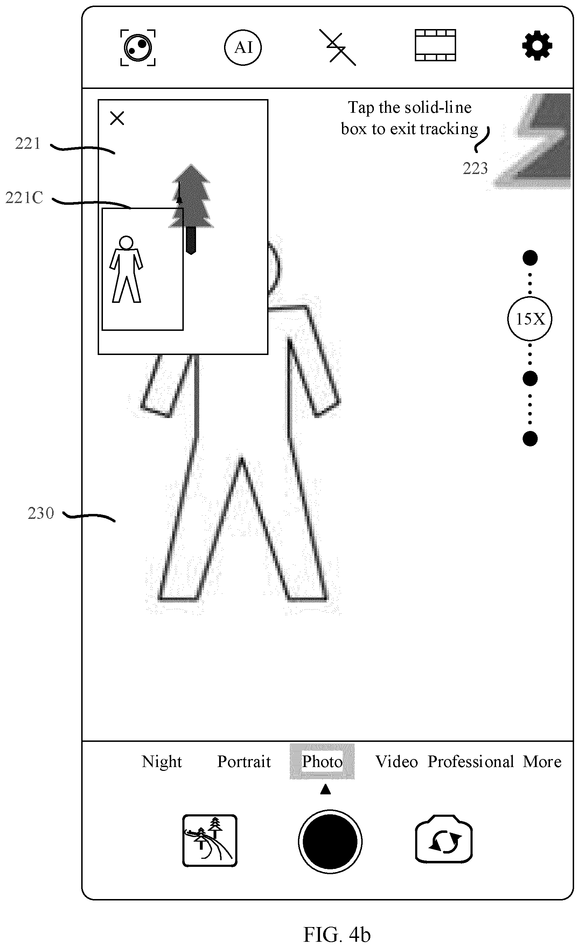

FIG. 3b shows a possible user interface provided by Camera. An application interface of Camera 208 is shown in FIG. 4b. The application interface may include: a display area 210, a zoom ratio adjustment area 211, a function bar 212, a mode selection area 213, a gallery icon 214, an image shooting icon 215, and a switch icon 216.

A displayed picture in the display area 210 is an image captured by the electronic device in real time by using a camera. In this case, the displayed picture in the display area 210 includes a part of a body of a person, a tree, and a bell on the tree. The camera currently used by the electronic device may be a default camera set in Camera, or the camera currently used by the electronic device may be a camera used when Camera is closed last time.

The zoom ratio adjustment area 211 may also be referred to as a focal length adjustment area, and is used to adjust an image shooting focal length of the camera, so as to adjust a display zoom ratio of the displayed picture in the display area 210. The zoom ratio adjustment area 211 includes an adjustment slider 211A. The adjustment slider 211A indicates a display zoom ratio. Currently, the adjustment slider 211Ais 5X, indicating that a current display zoom ratio is 5 times. A user may zoom in or zoom out the displayed picture in the display area 210 by sliding the adjustment slider 211A in the zoom ratio adjustment area 211. For example, when the adjustment slider 211Ais slid upwards, the display zoom ratio of the displayed picture in the display area 210 increases, so that the person at the current 5X zoom ratio may not be in the display area; and when the adjustment slider 211A is slid downwards, the display zoom ratio of the displayed picture in the display area 210 decreases, so that the person at the current 5X zoom ratio can be completely displayed in the display area.

In some embodiments, the display zoom ratio of the displayed picture in the display area 210 is not limited to being adjusted by using the zoom ratio adjustment area 211, and the user may further adjust the display zoom ratio of the displayed picture in the display area 210 by using another shortcut. For example, in the display area 210, separating two fingers may increase the display zoom ratio, and closing two fingers may decrease the display zoom ratio.

The function bar 212 is used to provide shortcut functions of Camera, including enabling AI Lens (icon 212A), switching flash (icon 212B), enabling Master AI (icon 212C), switching a color mode (icon 212D), enabling a camera setting interface (icon 212E), and the like.

The mode selection area 213 is used to provide different image shooting modes. Based on different image shooting modes selected by the user, cameras enabled by the electronic device and image shooting parameters are accordingly different. A night mode, a portrait mode, a photo mode, a video mode, a professional mode, and more modes may be included. An icon of the photo mode in FIG. 3b is marked, to prompt the user that a current mode is the photo mode.

In the night mode, the electronic device 100 may improve a detail presentation capability for a bright part and a dark part, control noise, and present more picture details. In the photo mode, the electronic device 100 adapts to most image shooting scenarios, and may automatically adjust an image shooting parameter based on a current environment. In the video mode, the electronic device 100 may be used to shoot a video. When detecting a user operation performed on "More", in response to the operation, the electronic device may display another selection mode, for example, a panorama mode (in which automatic stitching is implemented, and the electronic device stitches a plurality of continuously taken photos into one photo to expand a field of view of an image), an HDR mode (in which three photos with underexposure, normal exposure, and overexposure are automatically and continuously taken, and best parts are selected and combined into one photo), or the like.

When detecting a user operation performed on an application icon of any mode (for example, the night mode, the photo mode, or the video mode) in the mode selection area 303, the electronic device 100 may enter a corresponding mode in response to the operation. Correspondingly, an image displayed in the display area 210 is an image processed in the current mode.

Mode icons in the mode selection area 213 are not limited to virtual icons. Alternatively, physical buttons deployed on an image shooting device/electronic device may be used to select a mode, so that the image shooting device enters the corresponding mode.

The gallery icon 214 is provided. When detecting a user operation performed on the gallery icon 214, the electronic device may enter a gallery of the electronic device 100 in response to the operation. The gallery may include photos and videos that have been taken. The gallery icon 214 may be displayed in different forms. For example, after the electronic device stores an image currently captured by the camera, a thumbnail of the image is displayed in the gallery icon 214.

The image shooting icon 215 is provided. When detecting a user operation (for example, a touch operation, a voice operation, or a gesture operation) performed on the image shooting icon 215, in response to the operation, the electronic device 100 obtains an image currently displayed in the display area 210, and stores the image in the gallery. The gallery may be entered by using a user operation (for example, a touch operation or a gesture operation) performed on the gallery icon 214.

The switch icon 216 may be used to switch between a front-facing camera and a rear-facing camera. An image shooting direction of the front-facing camera is the same as a display direction of a screen of the electronic device used by the user, and an image shooting direction of the rear-facing camera is opposite to the display direction of the screen of the electronic device used by the user.

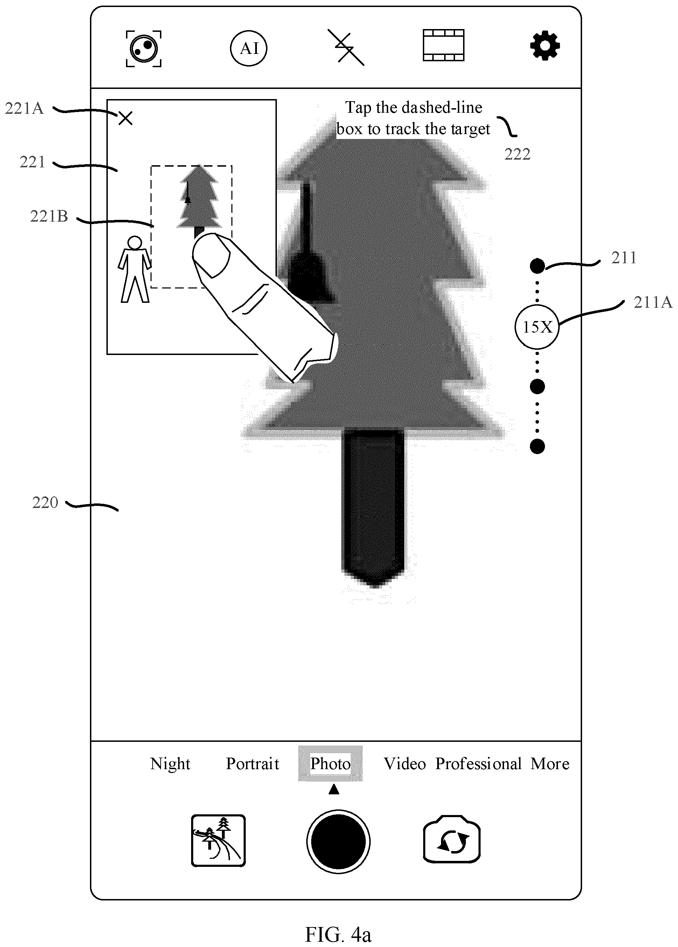

Based on the user interface provided by Camera in FIG. 3b, when the electronic device 100 receives a user operation performed on the user interface, the electronic device 100 triggers a target tracking mode, and displays, for example, an interface shown in FIG. 4a.

The user operation may be that the user slides the adjustment slider 211A in the zoom ratio adjustment area 211 upwards, so that the display zoom ratio of the displayed picture in the display area 210 increases. When the display zoom ratio of the electronic device 100 increases to be not less than a preset ratio, the electronic device 100 triggers the target tracking mode, and displays, for example, the interface shown in FIG. 4a. The preset ratio may be, for example, 15X.

Optionally, the user operation may be that the user separates two fingers in the display area 210 to increase the display zoom ratio. When the display zoom ratio of the electronic device 100 increases to be not less than the preset ratio, the electronic device 100 triggers the target tracking mode, and displays, for example, the interface shown in FIG. 4a.

In addition to the foregoing manners of triggering the target tracking mode, in this embodiment of this application, another manner may further be used by the electronic device 100 to trigger the target tracking mode.

Optionally, FIG. 3b may further include a shortcut icon for triggering the target tracking mode. The user operation may be a tap operation performed on the shortcut icon. The electronic device 100 receives the tap operation, triggers the target tracking mode, and displays, for example, the interface shown in FIG. 4a.

FIG. 4a shows an example of an application interface for triggering the electronic device 100 to enable the target tracking mode. When the display zoom ratio of the electronic device 100 is not less than the preset ratio, an application interface displayed by the electronic device 100 may be the application interface shown in FIG. 4a. On the application interface, the adjustment slider 211A in the zoom ratio adjustment area 211 is 15X currently, indicating that the current display zoom ratio is 15 times.

The application interface shown in FIG. 4a includes a display area 220, a preview box 221, and a guide banner 222. Because the current display zoom ratio is 15X, a displayed picture in the display area 220 is magnified by 15 times compared with the displayed picture in the display area 210 in FIG. 3b.

A picture displayed in the preview box 221 is a raw image captured by the camera in real time. The preview box 221 is a display area in the display area 220, and is generally suspended on the displayed picture in the display area 220. It can be learned that, an image displayed in the preview box 211 has a larger range compared with the image displayed at the 5X zoom ratio (for example, the displayed image in the display area 210 in FIG. 3b). Generally, when the display zoom ratio is 5X, the displayed image is not a raw image captured by the camera, but an image displayed after the raw image captured by the camera is cropped. Herein, the image displayed in the preview box is the raw image captured by the camera in real time, indicating that a tracking range in this embodiment of this application is a range of the raw image captured by the camera.

In FIG. 4a, the picture displayed in the preview box 221 at this time includes a person (complete), a tree, and a bell on the tree. A picture in a dashed-line box 221B in the preview box 221 is the picture displayed in the display area 220, indicating which part of the picture captured by the camera in real time is the picture currently displayed in the display area 220. Because the current display zoom ratio is 15X, the image displayed in the display area 220 at this time includes the tree and the bell on the tree, and does not include the person. An exit icon 221A is used to close the preview box 221. When the electronic device 100 detects a user operation performed on the exit icon 221A, the electronic device 100 closes the preview box 221. Optionally, the electronic device 100 closes both the preview box 221 and the guide banner 222.

The guide banner 222 provides an example manner of enabling the target tracking mode by displaying a text "Tap the dashed-line box to track the target" to prompt the user. The dashed-line box is the dashed-line box 221B.

In some embodiments, the dashed-line box 221B may indicate different information based on different display forms (display colors, or display shapes). For example, when a display color of the dashed-line box 221B is a first color, it indicates that the electronic device 100 currently detects no target subject. Optionally, the guide banner 222 may display a text "No target is detected" to prompt the user. When the display color of the dashed-line box 221B is a second color, it indicates that the electronic device 100 currently detects a target subject. Optionally, the guide banner 222 may display a text "Tap the dashed-line box to track the target" to prompt the user.

Tapping the dashed-line box (the dashed-line box 221B) to track the target is only a manner of enabling the target tracking mode, and is irrelevant to the displayed picture in the dashed-line box 221B. In FIG. 3b, when the target subject detected by the electronic device 100 is the person, but there is no picture of the person in the dashed-line box 221B, the user taps the dashed-line box 221B, so that the electronic device 100 tracks the person.

In some embodiments, when the electronic device 100 detects the target subject, the electronic device 100 may highlight the target subject in the preview box 221, for example, display another dashed-line box to frame the target subject, to prompt the user of the target subject detected by the electronic device 100.

Based on FIG. 4a, the electronic device 100 may enable the target tracking mode. FIG. 4b shows an example of an application interface of the target tracking mode.

In some embodiments, when the electronic device 100 detects a user operation performed on the dashed-line box 221B, the electronic device 100 enables the target tracking mode. In some embodiments, when the electronic device 100 detects a user operation performed on the target subject in the preview box 221, the electronic device 100 enables the target tracking mode. In some embodiments, FIG. 4a may further include a shortcut icon for enabling the target tracking mode. The electronic device 100 receives a tap operation performed on the shortcut icon, enables the target tracking mode, and displays, for example, the application interface shown in FIG. 4b.

The application interface shown in FIG. 4b includes a display area 230, a preview box 221, and a guide banner 223.

A picture displayed in the preview box 221 is the raw image captured by the camera in real time. The electronic device 100 enables the target tracking mode. The electronic device 100 identifies a target subject (namely, the person in the image displayed in the preview box 211) in an image currently captured by the camera, and displays a solid-line box 221C in the preview box 221. A picture in the solid-line box 221C is a picture displayed in the display area 230, indicating which part of the picture captured by the camera in real time is the picture currently displayed in the display area 230. In this embodiment of this application, the solid-line box may also be referred to as a picture output box. In FIG. 4b, the person is displayed in an area on the left of the display area 230 at this time. Herein, because the target subject is located on the left edge of the picture displayed in the preview box 211, a position on the left edge of the preview box 221 is selected for the solid-line box 221C. In the solid-line box 211C, the target subject is located in an area on the left of the solid-line box 221C. When the target subject moves, a display position of the solid-line box 221C moves with the target subject.

The guide banner 223 provides a manner of exiting the target tracking mode, and prompts the user of "Tap the solid-line box to exit tracking". The solid-line box is the solid-line box 221C. When the electronic device 100 detects a user operation performed on the solid-line box 221C, the electronic device 100 exits the target tracking mode. Optionally, in this case, the electronic device 100 displays a user interface shown in FIG. 4a. Optionally, in this case, the electronic device 100 closes both the preview box 221 and the guide banner 223, and displays, in the display area 230, the displayed picture in the display area 220 in FIG. 4a.

It can be learned that, the display area 220 in FIG. 4a displays an image obtained after the image captured by the camera is magnified by 15 times, and a part at a most center position of the image captured by the camera is selected through cropping. In this case, when a tap operation performed on the image shooting icon 215 is detected, the electronic device 100 obtains the image currently displayed in the display area 220. In FIG. 4b, the target tracking mode is enabled, and when images captured by the camera are a same image (images in the preview boxes 221 in FIG. 4a and FIG. 4b are the same), the image displayed in the display area 230 is a part that includes the target subject and that is of the image captured by the camera. In this case, when a tap operation performed on the image shooting icon 215 is detected, the electronic device 100 obtains the image currently displayed in the display area 230. In this way, a picture/video of the target subject can be obtained without moving the electronic device 100, and this implements tracking of the target subj ect.

The foregoing describes the display interface on which the electronic device 100 enables the target tracking function. A display interface and a user operation of how to enable the target tracking function are not limited in this embodiment of this application.

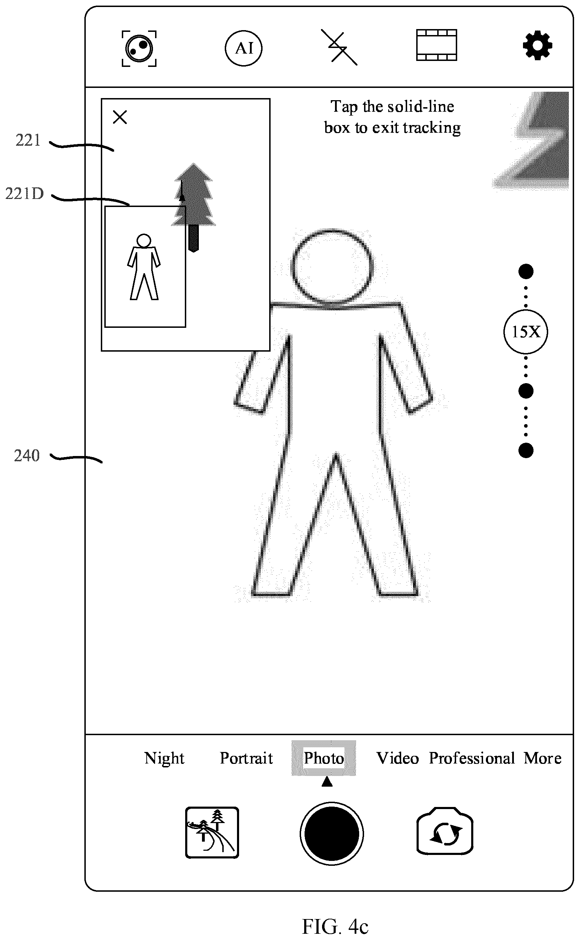

In the target tracking mode, the electronic device 100 does not move, the target subject moves, and the electronic device 100 may track the target subject. As shown in FIG. 4c, a picture displayed in the preview box 221 is the raw image captured by the camera in real time. Compared with that in the image captured in FIG. 4b, because the electronic device 100 does not move, a background (tree) in the preview box 221 does not change. It can be learned that, the person in FIG. 4c moves a distance to the right compared with that in FIG. 4b, but positions of a solid-line box 221D and the solid-line box 221C relative to the preview box 221 are the same. A picture in the solid-line box 221D is a picture displayed in a display area 240, indicating which part of the picture captured by the camera in real time is the picture currently displayed in the display area 240. In this case, the person is displayed in an area in the middle of the display area 240. Herein, a position on the left edge of the preview box 221 is selected for the solid-line box 221D, and the target subject is located in an area in the middle of the solid-line box 221D.

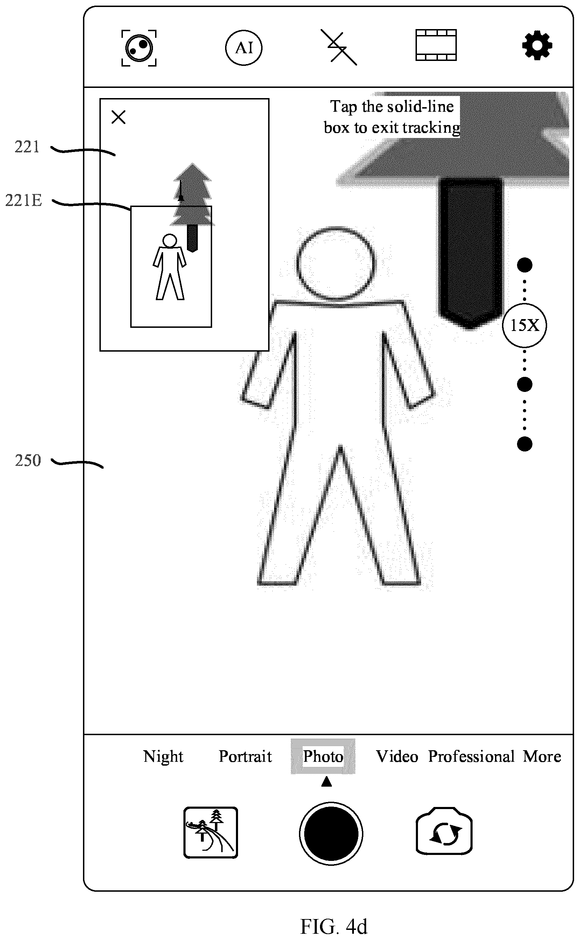

When the electronic device 100 does not move, the target subject continues to move. As shown in FIG. 4d, compared with that in the image captured in FIG. 4c, because the electronic device 100 does not move, the background (tree) in the preview box 221 does not change. It can be learned that, the person in FIG. 4d moves a distance to the right compared with that in FIG. 4c, and a solid-line box 221E moves with the target subject (person), that is, the target subject is still in an area in the middle of the solid-line box 221E. A picture in the solid-line box 221E is a picture displayed in a display area 250. In this case, the person is displayed in an area in the middle of the display area 250.

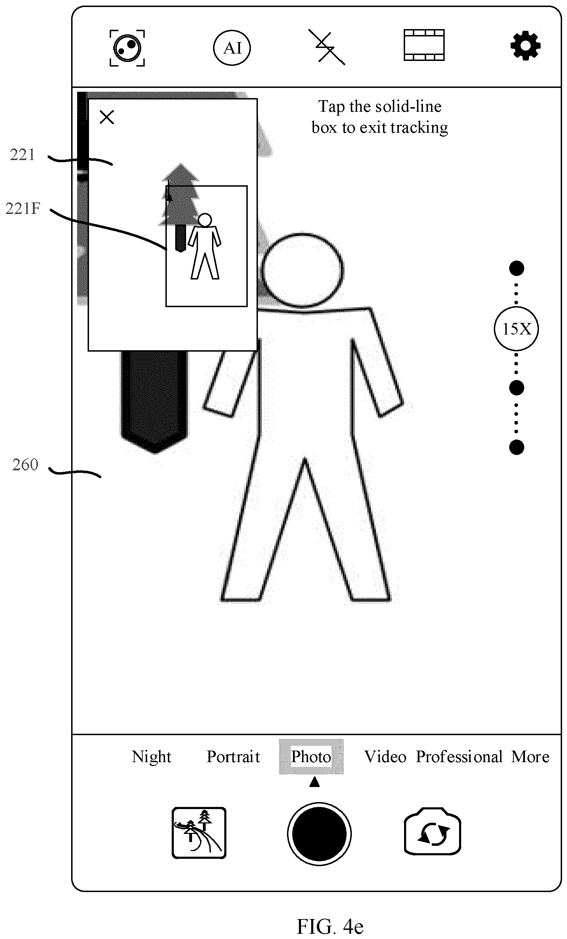

When the electronic device 100 does not move, the target subject continues to move. As shown in FIG. 4e, compared with that in the image captured in FIG. 4d, because the electronic device 100 does not move, the background (tree) in the preview box 221 does not change. It can be learned that, the person in FIG. 4e moves a distance to the upper right compared with that in FIG. 4d, and a solid-line box 221F moves with the target subject (person), that is, the target subject is still in an area in the middle of the solid-line box 221F. A picture in the solid-line box 221F is a picture displayed in a display area 260. In this case, the person is displayed in an area in the middle of the display area 260.

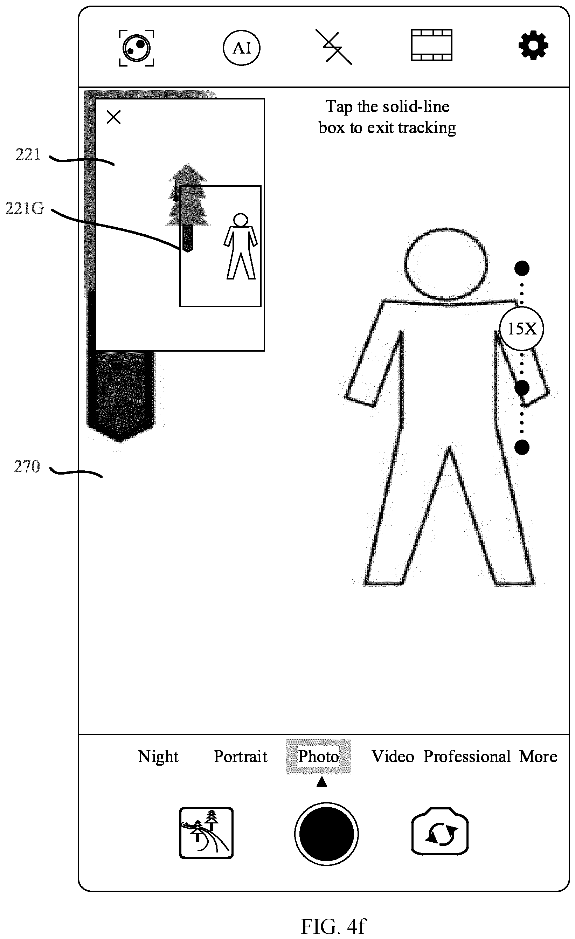

When the electronic device 100 does not move, the target subject continues to move. As shown in FIG. 4f, compared with that in the image captured in FIG. 4e, because the electronic device 100 does not move, the background (tree) in the preview box 221 does not change. It can be learned that, the person in FIG. 4f moves a distance to the right compared with that in FIG. 4e. In this case, the person has moved to an edge of an image shooting range of the electronic device 100. A solid-line box 221G moves with the target subject (person). Because the target subject is located on a right edge of the picture displayed in the preview box 211, a position on the right edge of the preview box 221 is selected for the solid-line box 221G. In the solid-line box 211G, the target subject is located in an area on the right of the solid-line box 221G. A picture in the solid-line box 221G is a picture displayed in a display area 270. In this case, the person is displayed in an area on the right of the display area 270.

Based on FIG. 4b to FIG. 4f, it can be learned that, in the target tracking mode, even if the electronic device 100 does not move (a position of the tree in the preview box does not change), the electronic device 100 may automatically track the target subject, and always display image data including the target subject in the display area.

It can be learned that, in FIG. 4b to FIG. 4f, the electronic device 100 tends to always display the target subject in an area in the middle of the display area. Herein, the electronic device 100 uses center coordinates of an output box as a guide point. After determining the guide point, the electronic device 100 always displays a guide of the target subject at a position of the guide point, to achieve an effect of displaying the target subject in the area in the middle of the display area. A center and a proportion of the output box are fixed relative to the raw image captured by the electronic device 100, and a size of the output box is related to the display zoom ratio of the electronic device 100. A larger display zoom ratio of the electronic device 100 indicates a smaller output box relative to the raw image. A smaller display zoom ratio of the electronic device 100 indicates a larger output box relative to the raw image.

In some embodiments, the guide point is a pixel coordinate point of the raw image captured by the electronic device 100. If the guide point is selected in the output box, the electronic device 100 may always display the target subject at the position of the guide point in the output box.

In FIG. 4b to FIG. 4f, because a position of the target subject in FIG. 4b is at a left edge of the image shooting range of the electronic device 100, with reference to the current display zoom ratio (15X) and a display ratio of the display area, the target subject cannot be displayed in the middle of the display area. In this case, the target subject is displayed on the left edge of the display area. When the target subj ect continuously moves rightwards into the image shooting range of the electronic device 100, for example, in FIG. 4c to FIG. 4e, the electronic device 100 tracks the target subject, and displays the target subject in the area in the middle of the display area. When the target subject continues to move rightwards to a position at a right edge of the image shooting range of the electronic device 100, as shown in FIG. 4f, with reference to the current display zoom ratio (15X) and the display ratio of the display area, the target subject cannot be displayed in the middle of the display area. In this case, the target subject is displayed on the right edge of the display area.

It may be understood that, the electronic device 100 tends to always display the target subject in the area in the middle of the display area. In an actual case, due to factors such as a fast movement speed of the target subject, a large shaking degree of the electronic device 100, and a slow data processing speed of the electronic device 100, an actual display situation is not ideal as shown in FIG. 4b to FIG. 4f. For example, in the case shown in FIG. 4c to FIG. 4e, the target subject may not be stably displayed in the middle of the display area. The target subject may be displayed near the upper, lower, left, and right areas around the middle area within a specific error range.

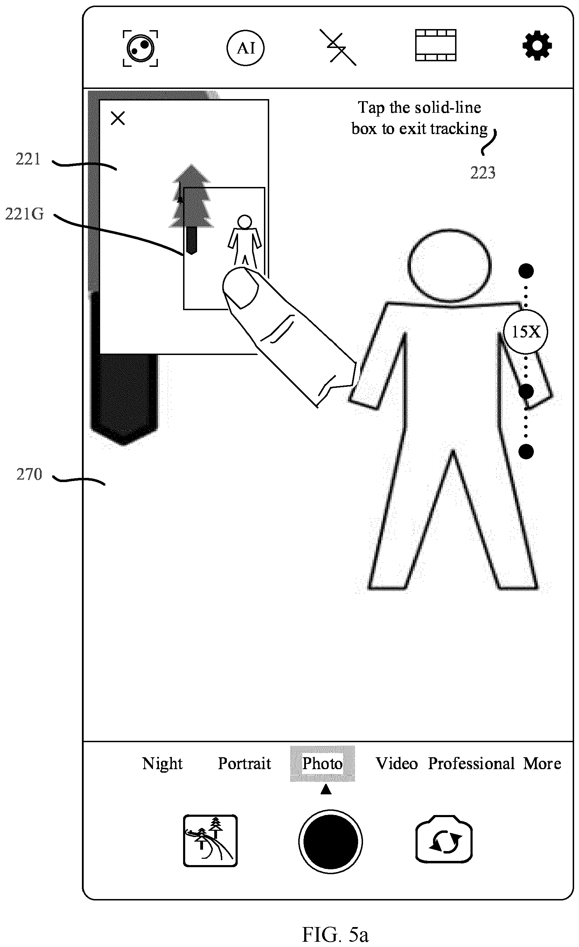

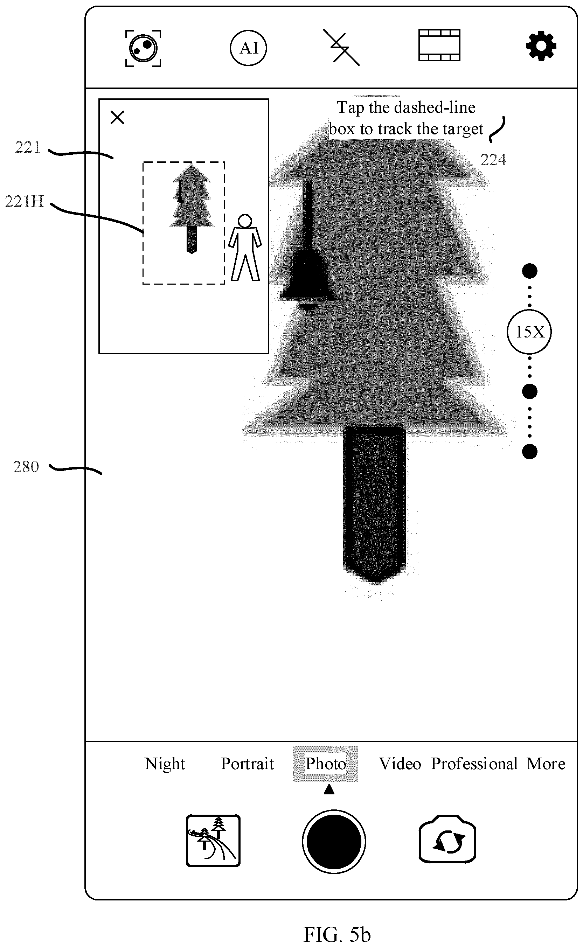

In some embodiments, as shown in FIG. 5a, when the electronic device 100 detects a user operation performed on the solid-line box 221G, the electronic device 100 exits the target tracking mode. Optionally, the electronic device 100 displays a user interface shown in FIG. 5b. In FIG. 5b, the electronic device 100 exits the target tracking mode, and a picture displayed in the preview box 221 is a raw image captured by the camera in real time. Because a current display zoom ratio is 15X, a displayed picture in a display area 280 is magnified by 15 times compared with the displayed picture in the preview box 221. A picture in a dashed-line box 221H in the preview box 221 is the picture displayed in the display area 280, indicating which part of the image captured by the camera in real time is the picture currently displayed in the display area 220. A guide banner 224 in FIG. 5b is "Tap the dashed-line box to track the target". The dashed-line box is the dashed-line box 221H.

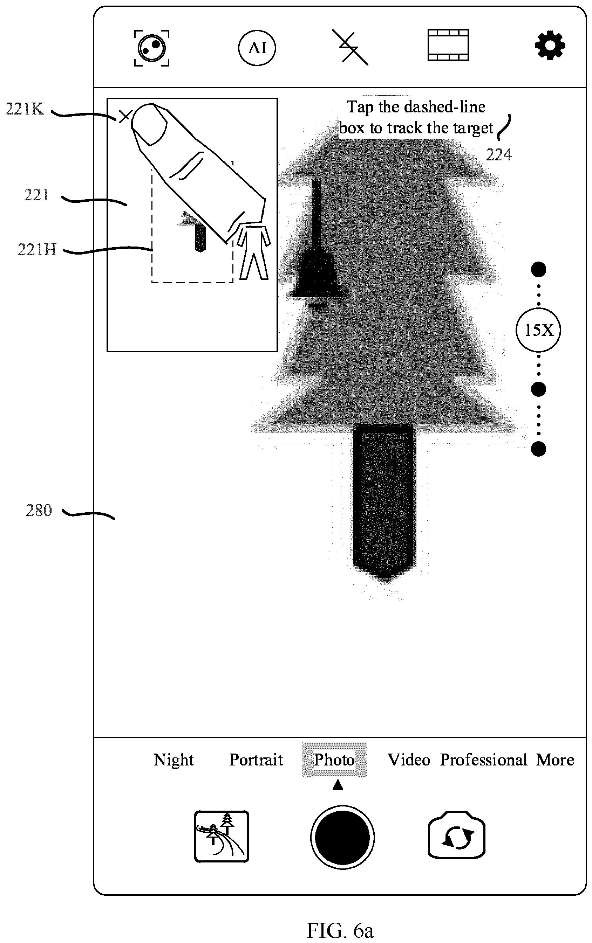

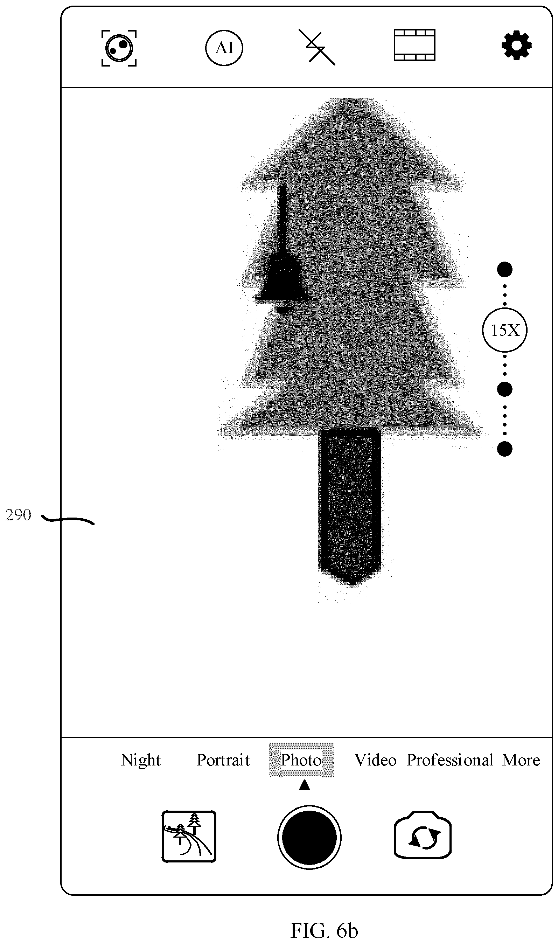

In some embodiments, as shown in FIG. 6a, when the electronic device 100 detects a user operation performed on an exit icon 221K, the electronic device 100 closes the preview box 221. Optionally, in this case, the electronic device 100 displays a user interface shown in FIG. 6b. In FIG. 6b, compared with that in FIG. 6a, the electronic device 100 closes both the preview box 221 and the guide banner 224, and displays, in a display area 290, the displayed picture in the display area 280 in FIG. 6a.

In FIG. 4b to FIG. 4f, the electronic device 100 tends to always display the target subject in the area in the middle of the display area. In this embodiment of this application, not limited to the area in the middle, the electronic device 100 may also limit the target subject in any area of the display area. The electronic device 100 may use any coordinate point of the display area as a guide point, and always guide a motion of the target subject to the guide point, to achieve an effect of displaying the target subject in any area of the display area.

In some embodiments, the electronic device 100 may determine the guide point based on a received user operation. For example, the electronic device 100 provides a setting input box of the guide point, and the electronic device 100 receives a pixel coordinate point entered by a user as the guide point. For another example, if the electronic device 100 receives a tap operation performed on the display area, the electronic device 100 determines that a tap position corresponding to the tap operation is a position of the guide point.

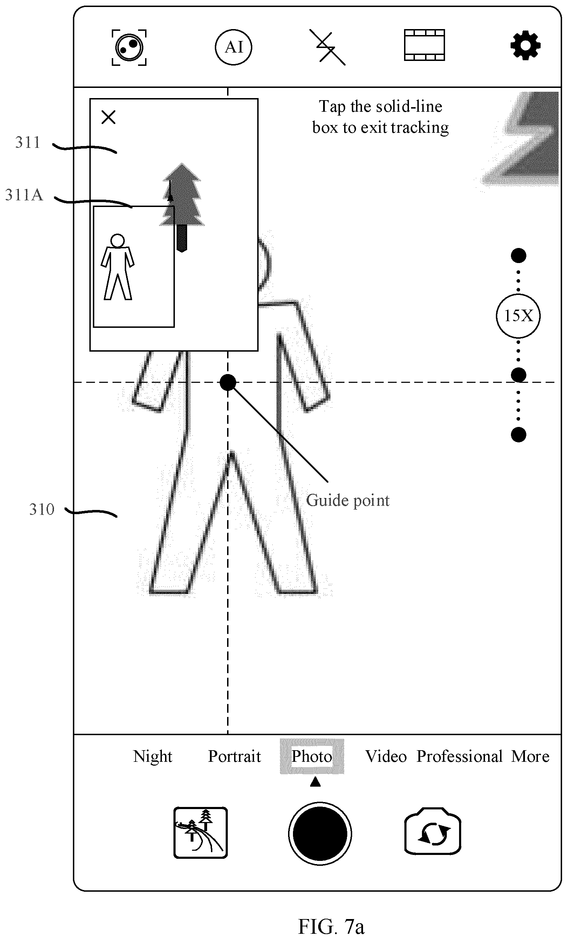

The following uses FIG. 7a to FIG. 7d as an example to describe a display interface in a case in which the electronic device 100 limits the target subject in an area on the left of the display area.

For example, in FIG. 4a, when the electronic device 100 detects a user operation performed on the dashed-line box 221B, the electronic device 100 enables the target tracking mode, and the electronic device 100 displays a user interface shown in FIG. 7a. In FIG. 7a, the electronic device 100 determines a guide point in a display area 310, and always guides a motion of the target subject to the guide point. The guide point is located in an area on the left of the display area. A picture displayed in a preview box 311 is an image captured by the camera in real time, and a display zoom ratio is 5X. The electronic device 100 enables the target tracking mode, and the electronic device 100 identifies the target subject (namely, the person in the image displayed in the preview box 311) in an image currently captured by the camera, and determines a position of a solid-line box 331A in the preview box 311. The solid-line box 331A includes the target subject identified by the electronic device 100. Because the electronic device 100 limits the target subject to the area on the left of the display area (a position of the guide point), the target subject is in an area on the left of the solid-line box 331A. A picture in the solid-line box 331A is a picture displayed in the display area 310. In this case, the person is displayed at the position of the guide point in a display area 320. The user interface shown in FIG. 7a is the same as that in FIG. 4b. Therefore, for the description of the user interface in FIG. 7a, refer to the description in FIG. 4b. Details are not described herein again.

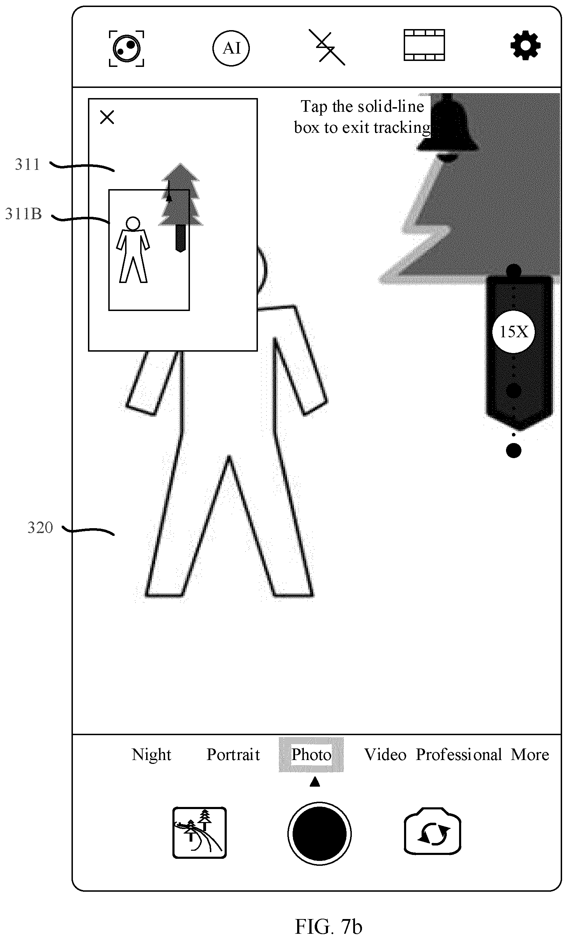

In the target tracking mode, the electronic device 100 does not move, the target subject moves, and the electronic device 100 tracks the target subject. As shown in FIG. 7b, it can be learned that, the person in FIG. 7b moves a distance to the upper right compared with that in FIG. 7a, and a solid-line box 311B moves with the target subject (person), that is, the target subject is still in an area on the left of the solid-line box 311B. A picture in the solid-line box 311B is a picture displayed in the display area 320. In this case, the person is displayed at the position of the guide point in the display area 320.

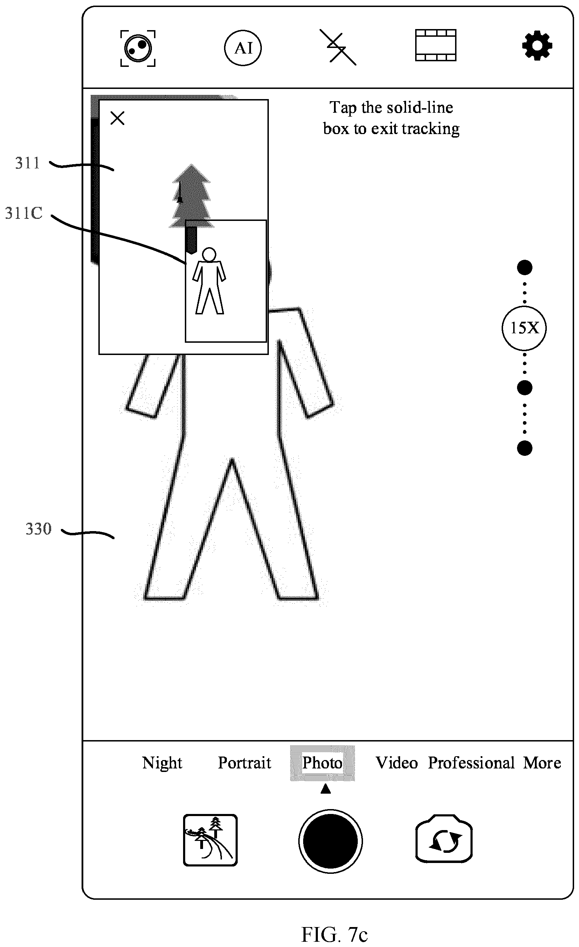

When the electronic device 100 does not move, the target subject continues to move. As shown in FIG. 7c, it can be learned that, the person in FIG. 7c moves a distance to the lower right compared with that in FIG. 7b, and a solid-line box 311C moves with the target subject (person), that is, the target subject is still in an area on the left of the solid-line box 311C. A picture in the solid-line box 311C is a picture displayed in a display area 330. In this case, the person is displayed at the position of the guide point in the display area 330.

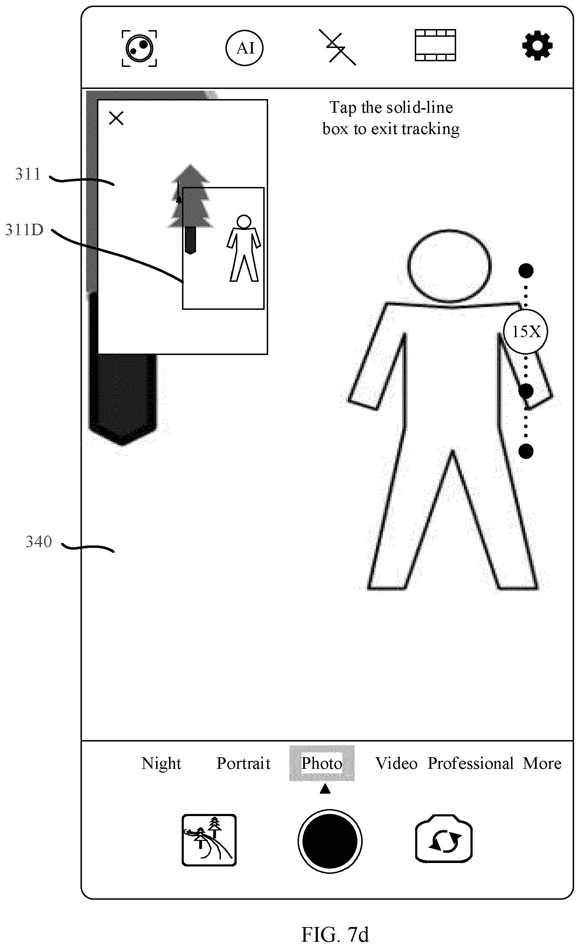

When the electronic device 100 does not move, the target subject continues to move. As shown in FIG. 7d, it can be learned that, the person in FIG. 7d moves a distance to the upper right compared with that in FIG. 7c. In this case, the person has moved to a right edge of an image shooting range of the electronic device 100, and a solid-line box 311D moves with the target subject (person). In this case, a position of the right edge of the preview box 211 is selected for the solid-line box 311D. In the solid-line box 311D, the target subject is displayed in an area on the right of the solid-line box 311D. Because a position of the target subject in FIG. 7d is at the right edge of the image shooting range of the electronic device 100, with reference to the current display zoom ratio (15X) and a display ratio of the display area, the target subject cannot be displayed on the left of the display area (the position of the guide point). In this case, the target subject is displayed on the right edge of the display area. A picture in the solid-line box 311D is a picture displayed in a display area 340. In this case, the person is displayed in an area on a right edge of the display area 340.

In conclusion, the electronic device 100 may use any coordinate point of the display area as a guide point, and always guide a motion of the target subject to the guide point, to achieve an effect of displaying the target subject in any area of the display area.

The foregoing describes a manner in which the electronic device 100 tracks a target subject when the electronic device 100 identifies a target object and uses the target object as the target subject. The following describes a manner of determining the target subject when the electronic device 100 identifies that the image captured by the camera includes a plurality of target objects.

Optionally, the electronic device 100 may determine a unique target subject from a plurality of target objects according to a preset rule. The preset rule may be a target object at a most center position in a currently captured image; or the preset rule may be a target object that occupies a largest image area in a currently captured image; or the like.

Optionally, when the electronic device 100 identifies that the image captured by the camera includes a plurality of target objects, the electronic device 100 may provide selection icons of the plurality of target objects. The electronic device 100 receives a user operation performed by a user on the selection icons of the plurality of target objects, parses a tap position of the user operation, and determines the target subject from the plurality of target objects.

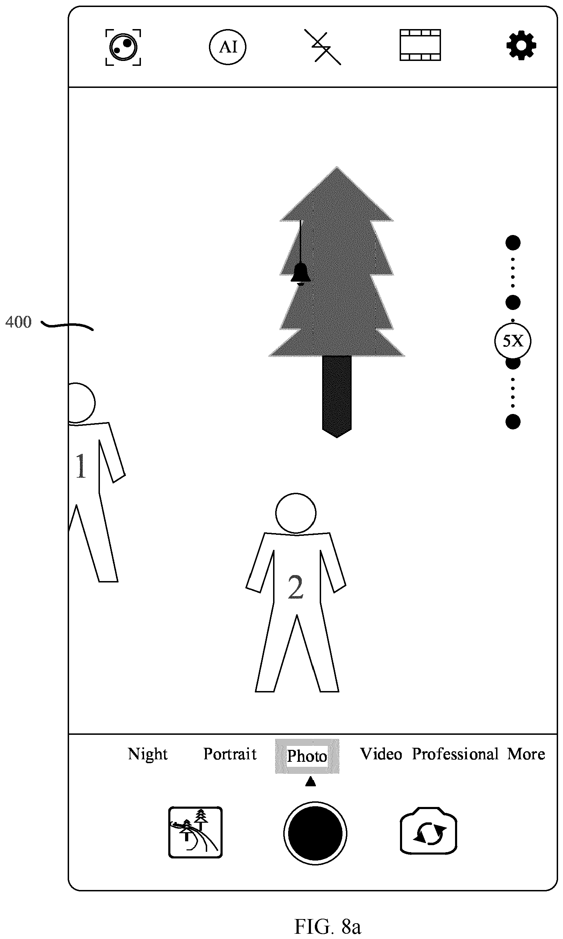

FIG. 8a shows a possible user interface provided by Camera. A displayed picture in a display area 400 is an image captured by an electronic device in real time by using a camera. In this case, the displayed picture in the display area 400 includes a part of a body of a person 1, a person 2, a tree, and a bell on the tree.

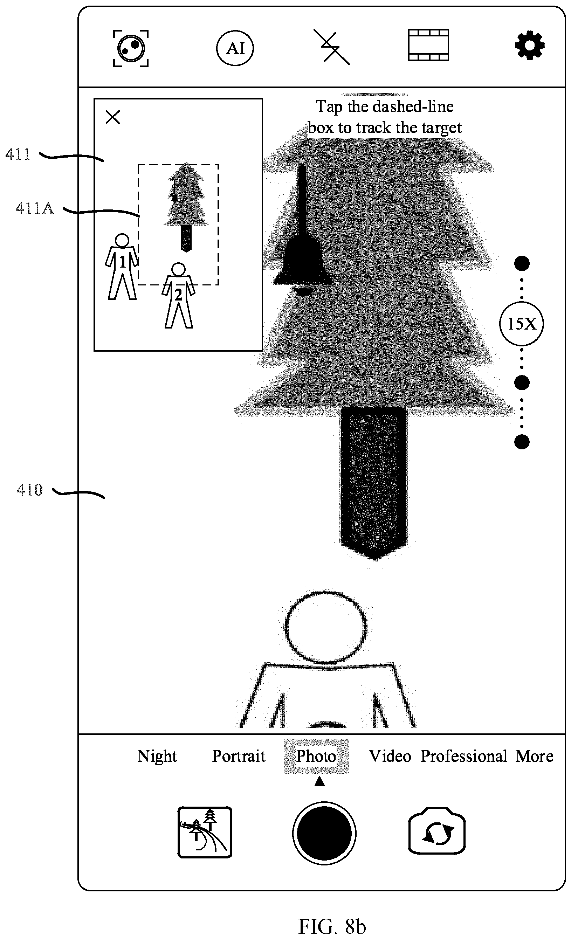

Based on the user interface provided by Camera in FIG. 8a, when the electronic device 100 receives a user operation performed on the user interface, the electronic device 100 triggers a target tracking mode, and displays, for example, an interface shown in FIG. 8b.

Optionally, the user operation may be that the user separates two fingers in the display area 400 to increase the display zoom ratio. When the display zoom ratio of the electronic device 100 increases to be not less than the preset ratio, the electronic device 100 triggers the target tracking mode, and displays, for example, an interface shown in FIG. 4a. The preset ratio may be, for example, 15X.

Optionally, FIG. 8a may further include a shortcut icon for triggering the target tracking mode. The user operation may be a tap operation performed on the shortcut icon. The electronic device 100 receives the tap operation, triggers the target tracking mode, and displays, for example, the interface shown in FIG. 8b.

As shown in FIG. 8b, a picture displayed in a preview box 411 is an image captured by the camera in real time. It can be learned that, an image displayed in the preview box 411 has a larger range compared with an image displayed at a 5X zoom ratio (for example, a displayed image in a display area 410 in FIG. 8b). The picture displayed in the preview box 411 at this time includes the person 1 (complete), the person 2, the tree, and the bell on the tree. A picture in a dashed-line box 411A in the preview box 411 is a picture displayed in the display area 410, indicating which part of the picture captured by the camera in real time is the picture currently displayed in the display area 410. Because a current display zoom ratio is 15X, the image displayed in the display area 410 at this time includes the tree, the bell on the tree, and an upper half of the body of the person 2.

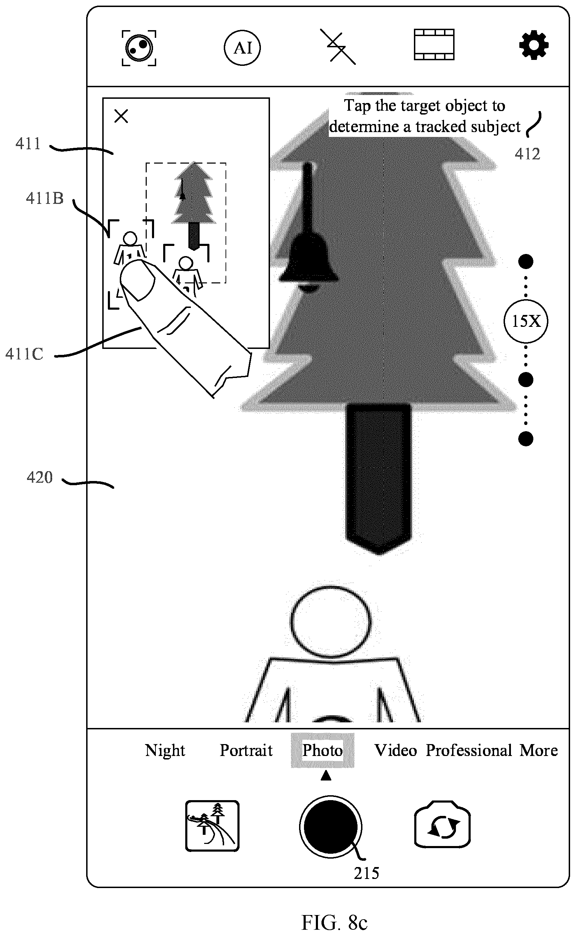

When the electronic device 100 detects a user operation performed on the dashed-line box 411A, the electronic device 100 enables the target tracking mode, and the electronic device 100 identifies a target subject in an image (namely, the image displayed in the preview box 411) currently captured by the camera. As shown in FIG. 8c, in this case, the electronic device 100 identifies two target objects, that is, the person 1 and the person 2. The electronic device 100 displays an area 411B and an area 411C. The area 411B indicates one target object: the person 1, and the area 411C indicates the other target object: the person 2. The electronic device 100 displays a guide banner 412, used to prompt the user to "Tap the target object to determine a tracked subject". When the user taps the area 411B, the electronic device 100 determines that the person 1 is the target subject. When the user taps the area 411C, the electronic device 100 determines that the person 2 is the target subject.

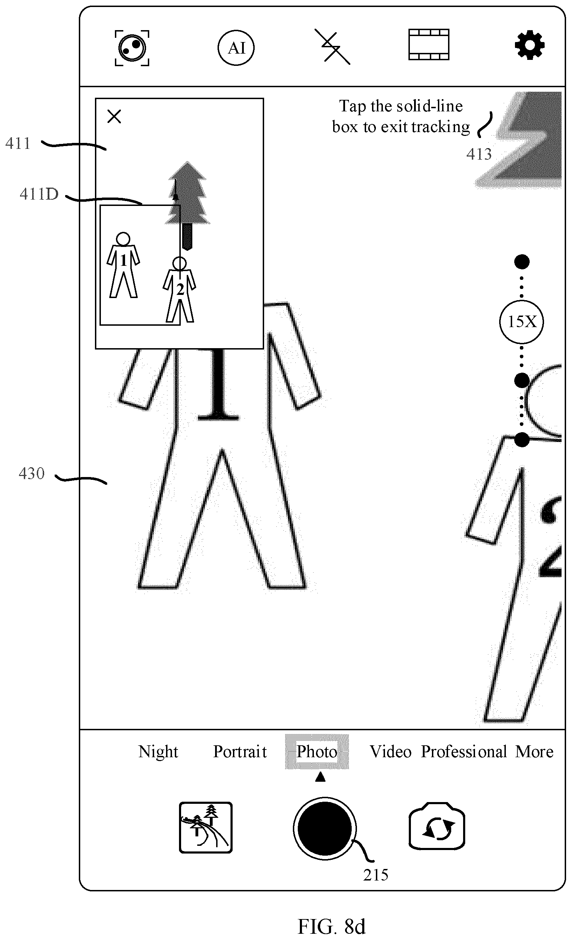

For example, when the user taps the area 411B, the electronic device 100 determines that the person 1 is the target subject, and displays a user interface shown in FIG. 8d. A picture displayed in the preview box 411 is a raw image captured by the camera in real time. The preview box 411 includes a solid-line box 411D. The solid-line box 411D includes the target subject (person 1) identified by the electronic device 100. It may be considered that the solid-line box 411D indicates tracking of the target subject by the electronic device 100. When the target subject moves, the solid-line box 411D moves with the target subject. A picture in the solid-line box 411D is a picture displayed in a display area 430, indicating which part of the picture captured by the camera in real time is the picture currently displayed in the display area 430.

It can be learned that, the display area 420 in FIG. 8c displays an image obtained after the image captured by the camera is magnified by 15 times, and a part at a most center position of the image captured by the camera is selected through cropping. In this case, when a tap operation performed on the image shooting icon 215 is detected, the electronic device 100 obtains the image currently displayed in the display area 420. In FIG. 8d, the target tracking mode is enabled, and when images captured by the camera are a same image (images in the preview boxes 411 in FIG. 8c and FIG. 8d are the same), the image displayed in the display area 430 is a part that includes the target subject (person 1) in the image captured by the camera. In this case, when a tap operation performed on the image shooting icon 215 is detected, the electronic device 100 obtains the image currently displayed in the display area 430. In this way, a picture/video of the target subject can be obtained without moving the electronic device 100, and this implements tracking of the target subj ect.

In some embodiments, based on the user interface provided by Camera in FIG. 8a, when the electronic device 100 receives a user operation performed on the user interface, the electronic device 100 triggers the target tracking mode, and the electronic device 100 may directly display an interface shown in FIG. 8c.

It may be understood that, a manner in which the electronic device 100 determines the target subject from the plurality of target objects is not limited to the foregoing example manner. This is not limited in this application.

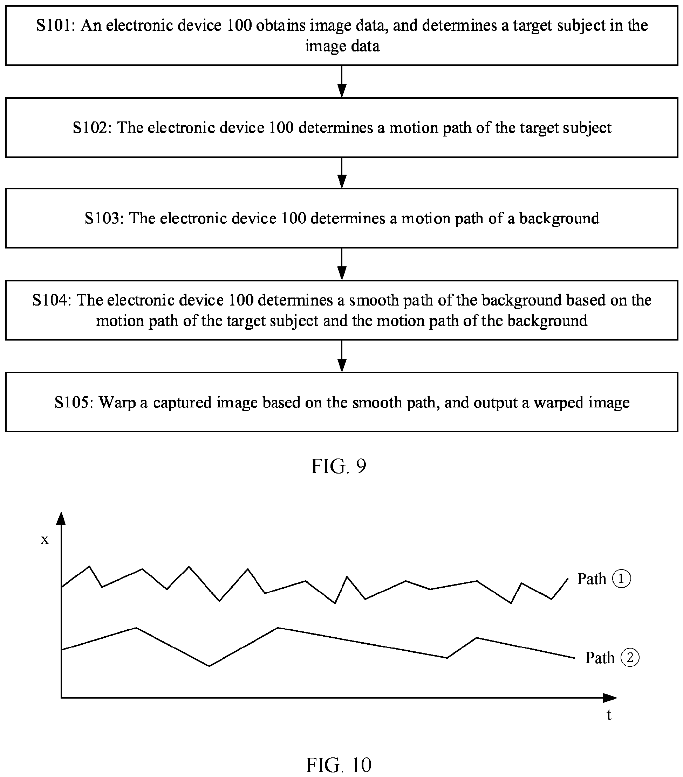

The foregoing describes a display interface in a target tracking method according to an embodiment of this application. The following describes an implementation principle of a target tracking method according to this application. FIG. 9 is a method flowchart of a target tracking method according to an embodiment of this application. The target tracking method may include the following steps.

S101: The electronic device 100 obtains image data, and determines a target subject in the image data.

The electronic device 100 obtains image data. The electronic device 100 may obtain image data captured in real time by using a camera. For example, a displayed picture in the preview box 221 in FIG. 4a is image data captured by the electronic device 100 in real time by using the camera. Alternatively, the electronic device 100 may obtain image data sent by another device, or may obtain image data stored in the electronic device 100. Then, the electronic device 100 performs subject identification on the obtained image data according to a target detection algorithm (which may also be an algorithm including target identification, tracking, feature matching, or the like), and determines the target subject. Alternatively, the electronic device 100 may determine the target subject in the image data based on a received user operation.

In some embodiments, the electronic device 100 displays a first interface. The first interface displays an image captured by the electronic device 100 by using the camera. Optionally, the first interface may be a preview interface of Camera. The electronic device 100 receives a first operation performed on the first interface, and in response to the first operation, the electronic device 100 triggers a target tracking mode, to determine the target subject in the obtained image data. The first operation may be a touch operation, a voice operation, a floating gesture operation, or the like. This is not limited herein. For example, if the first interface is a preview interface of Camera shown in FIG. 3b, the first operation may be a user operation of increasing a display zoom ratio, and then, the electronic device 100 displays the interface shown in FIG. 4a. The electronic device 100 determines the target subject in the obtained image data. For example, the person in the preview box 211 in FIG. 4a is the target subject.

In some embodiments, the electronic device 100 captures the image data in real time by using the camera, and performs subject identification on the captured image data. The electronic device 100 performs target detection on a captured image by using the target detection algorithm, to obtain one or more target objects in the image. The one or more target objects may be a person, an animal, an article, a building, or the like. The electronic device 100 determines the target subject from the one or more target objects. It should be noted that, the electronic device 100 performs subject identification on the captured image data, and a remaining part in the captured image data other than the target subject part is considered as a background part.

In some embodiments, after detecting the one or more target objects in the image, the electronic device 100 determines the target subject from the one or more target objects according to a preset rule. The preset rule may be a target object at a most center position in a currently captured image; or the preset rule may be a target object that occupies a largest image area in a currently captured image; or the like.

In some embodiments, when the electronic device 100 performs target detection on the obtained image by using the target detection algorithm, the electronic device 100 performs analysis processing on a plurality of frames of images, to determine a moving object in the plurality of frames of images. That is, the one or more target objects are moving objects. It should be noted that, a remaining part in the captured image data other than a part of the one or more target objects is considered as a background part.

In some embodiments, after detecting the one or more target objects in the image, the electronic device 100 provides selection icons of the one or more target objects for a user on a display interface. The electronic device 100 receives a user operation performed by the user on the selection icons of the one or more target objects, parses a tap position of the user operation, and determines the target subject from the one or more target objects. For example, as shown in FIG. 8c, the electronic device 100 detects two target objects (the person 1 and the person 2) in the image. The electronic device 100 receives a user operation performed by the user on a display area of the person 1 and parses a tap position of the user operation, and the electronic device 100 determines that the target subject is the person 1.

S102: The electronic device 100 determines a motion path of the target subject.

After performing subject identification and determining the target subject, the electronic device 100 parses and tracks, based on the plurality of frames of images, the motion path of the target subject. The motion path is also referred to as a subject motion path.

Generally, the image frame captured by the electronic device 100 is N+2 frames, and a picture displayed in a display area by the electronic device 100 in real time is an N^{th} frame of image captured by the electronic device 100, where N is a positive integer. The plurality of frames of images herein mean N+2 frames of images. The electronic device 100 determines the motion path of the target subject based on the captured N+2 frames of images.

A motion path of a target subject is described by using both a motion path in an x-axis direction and a motion path in a y-axis direction. In this embodiment of this application, the motion path in the x-axis direction is used as an example. FIG. 10 shows a line chart of motion paths of a target subject and a background. In FIG. 10, a vertical coordinate is a pixel coordinate in an x-axis direction, and a horizontal coordinate is a quantity of image frames in an order of time t. A path ① in FIG. 10 is a motion path of a target subject in an x-axis direction, and the motion path of the target subject may be drawn based on a target point on the target subject. The electronic device 100 obtains pixel coordinates of the target point in each frame of raw image, and the electronic device 100 determines, based on pixel coordinates of the target point in the x-axis direction in different image frames, a motion path of the target point in the x-axis direction in the different image frames, and uses the motion path as the motion path of the target subject in the x-axis direction.

Optionally, the motion path of the target subject may alternatively be drawn based on an area on the raw image, where the area is of a fixed size, and an image of the target subject is always in the area. The electronic device 100 obtains pixel coordinates of a target point (a center point of the area is used as an example below) in the area in each frame of image, and the electronic device 100 determines, based on pixel coordinates of the center point of the area in the x-axis direction in different image frames, a motion path of the center point in the x-axis direction in the different image frames, and uses the motion path as the motion path of the target subject.

Optionally, the motion path of the target subject may alternatively be drawn based on a plurality of target points on the target subject. The electronic device 100 obtains pixel coordinates of the plurality of target points in each frame of raw image, and the electronic device 100 determines, based on the pixel coordinates of the plurality of target points in the x-axis direction in different image frames, a motion path of each of the plurality of target points in the x-axis direction in the different image frames. The electronic device 100 weights the motion path of the plurality of target points to determine at least one motion path as the motion path of the target subj ect.

It should be noted that, the foregoing describes the motion path of the target subject in the x-axis direction, and a description of a principle of the motion path of the target subject in the y-axis direction is the same as the description of a principle of the motion path in the x-axis direction. Details are not described herein again.

S 103: The electronic device 100 determines a motion path of a background.

The electronic device 100 performs subject identification on the captured image data, and a remaining part in the captured image data other than the target subject part is considered as a background part.

The electronic device 100 parses and tracks the motion path of the background based on a plurality of frames of images. The motion path is also referred to as the motion path of the background, and the plurality of frames of images herein mean N+2 frames of images.

A motion path of a background is described by using both a motion path in the x-axis direction and a motion path in the y-axis direction. In this embodiment of this application, the motion path in the x-axis direction is used as an example. As shown in FIG. 10, a path ② in FIG. 10 is a motion path of the background in the x-axis direction. The motion path of the background may be drawn based on a target point in the background. The electronic device 100 obtains pixel coordinates of the target point in each frame of image, and the electronic device 100 determines, based on pixel coordinates of the target point in the x-axis direction in different image frames, a motion path of the target point in the x-axis direction in the different image frames, and uses the motion path as the motion path of the background in the x-axis direction.

Optionally, the motion path of the background may alternatively be drawn based on a plurality of target points in the background. The electronic device 100 obtains pixel coordinates of the plurality of target points in each frame of image, and the electronic device 100 determines, based on the pixel coordinates of the plurality of target points in the x-axis direction in different image frames, a motion path of each of the plurality of target points in the x-axis direction in the different image frames. The electronic device 100 weights the motion path of the plurality of target points to determine at least one motion path as the motion path of the background.

Optionally, the motion path of the background may alternatively be drawn based on pose difference data of a previous frame and a current frame. The electronic device 100 measures a pose change of the electronic device 100 based on a 6 depth of field (depth of field, dof) technology or a 3dof technology. The electronic device 100 converts a spatial position change into a change of pixel coordinates of the motion path of the background, to describe the motion path of the background.

The foregoing describes the motion path of the background in the x-axis direction, and a description of a principle of the motion path of the background in the y-axis direction is the same as the description of a principle of the motion path in the x-axis direction. Details are not described herein again.

It should be noted that there is no sequence between step S104 and step S105.

S 104: The electronic device 100 determines a smooth path of the background based on the motion path of the target subject and the motion path of the background.

The electronic device 100 determines the smooth path of the background based on the motion path of the target subject and the motion path of the background. The electronic device 100 drives a background motion based on the smooth path, so that stable tracking of the target subject can be implemented.

First, the electronic device 100 determines a polyline of a difference between the target subject and the guide point based on the motion path of the target subject. The difference polyline may also be referred to as a displacement guide line, and indicates a displacement of the target subject from the guide point. The guide point is a position at which the electronic device 100 expects to display the target subject in an output box. Generally, the electronic device 100 considers by default that the guide point is a center point of the output box. In some embodiments, the electronic device 100 may determine the guide point based on a received user operation.

A center and a proportion of the output box are fixed relative to the raw image captured by the electronic device 100. The electronic device 100 sets the guide point in the output box. The electronic device 100 may display a target point of the target subject on the guide point based on the polyline of the difference between the target subject and the guide point, and therefore the target subject is displayed in the area in which the guide point is located.

The target point of the target subject may be any point on the target subject. A preset guide point of the electronic device 100 may be any point of the output box.

For example, the electronic device 100 may set that the guide point is the center point of the output box, and the electronic device 100 guides, based on a polyline of a difference between the target point of the target subject and the center point of the output box, the target point of the target subject to be displayed on the center point of the output box, to achieve an effect of always displaying the target subject in the middle of the output box. In this embodiment of this application, the electronic device 100 may use any coordinate point of the output box as the guide point, and always display the target point of the target subject on the guide point, to achieve an effect of displaying the target subject at any position in the display area.

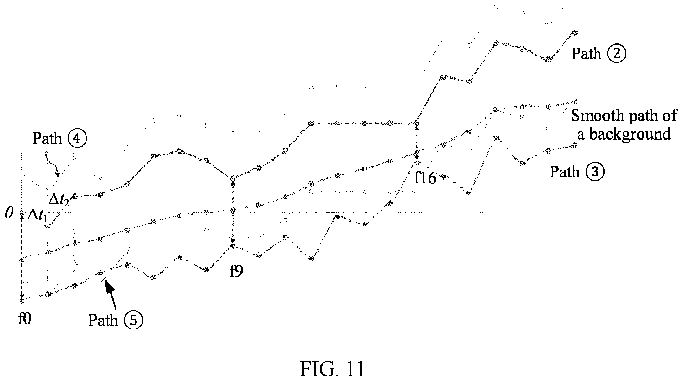

A polyline of a difference between the target subject and the preset guide point is a difference between pixel coordinates of the target point of the target subject and pixel coordinates of the preset guide point. As shown in FIG. 11, a path ③ in FIG. 11 is a polyline of a pixel difference between the target point of the target subject and the preset guide point in the x-axis direction. The electronic device 100 obtains pixel coordinates of the target point in each frame of image, and the electronic device 100 determines, based on a pixel coordinate difference between the target point and the preset guide point in the x-axis direction in different image frames, the polyline of the difference between the target subject and the preset guide point shown in the path ③.

Then, the electronic device 100 determines the smooth path of the background based on the difference polyline and the motion path of the background. As shown in FIG. 11, a path ② is an example of the motion path of the background, and the electronic device 100 determines the smooth path of the background based on the difference polyline (the path ③) and the motion path of the background (the path ②). The smooth path should be smooth and toward a midpoint. It can be learned that, at two points f0 and f9, points on the smooth path are midpoints of the path ③ and the path 02 . However, at a point f16, if a midpoint of the path ③ and the path ② is taken as a point on the smooth path, the smooth path is not smooth. Therefore, to ensure smoothness, the smooth path at the point f16 is not taken at a position of the midpoint. That is, points on the smooth path are all determined on a basis of smoothness and then toward the midpoints of the path ③ and the path ②.

The electronic device 100 drives the background motion based on the smooth path, so that stable tracking of the target subject can be implemented.

It should be noted that the smooth path of the background includes a path in the x-axis direction and a path in the y-axis direction. The foregoing solution process is described by using a motion in the x-axis direction as an example, and a smooth path obtained through solution is a smooth path in the x-axis direction. In the y-axis direction, the electronic device determines a motion path of the target subject and a motion path of the background, and then determines a smooth path in the y-axis direction based on the motion path of the target subject and the motion path of the background in the y-axis direction. This is the same as a principle of solving the smooth path in the x-axis direction. Details are not described herein again.

In some embodiments, because the smooth path is solved in the x-axis direction, the electronic device 100 further optimizes the smooth path based on a polyline on a left boundary of an output image and a polyline on a right boundary of the output image. As shown in FIG. 11, a path □ in FIG. 11 is a polyline on the left boundary of the output image, and a path □ is a polyline on the right boundary of the output image. The path □ and the path □ are obtained after pixel coordinates of a left boundary and a right boundary of the output box on each frame of image are determined after the electronic device 100 warps raw image data. When determining the smooth path of the background, the electronic device 100 always limits the smooth path of the background between the polyline on the left boundary of the output image and the polyline on the right boundary of the output image, to avoid that a boundary of the output box is outside a boundary of the background.

Similarly, when solving the smooth path in the y-axis direction, the electronic device 100 further optimizes the smooth path based on a polyline on an upper boundary of the output image and a polyline on a lower boundary of the output image.

In this implementation, based on the smooth path determined in the foregoing method, the electronic device 100 drives the background to perform warping based on the smooth path, so that image stabilization and tracking can be synchronously implemented.

S105: The electronic device 100 warps the captured image based on the smooth path, and outputs a warped image.

After determining the smooth path of the background, the electronic device 100 calculates, based on the smooth path, a transformation matrix from an original motion path of the background to the smooth path obtained through solution, warps the raw image to the smooth path, and outputs the warped image. The output image is an image that implements stable tracking of the target subject. In this case, the electronic device 100 implements background image stabilization and tracking of the target subject.

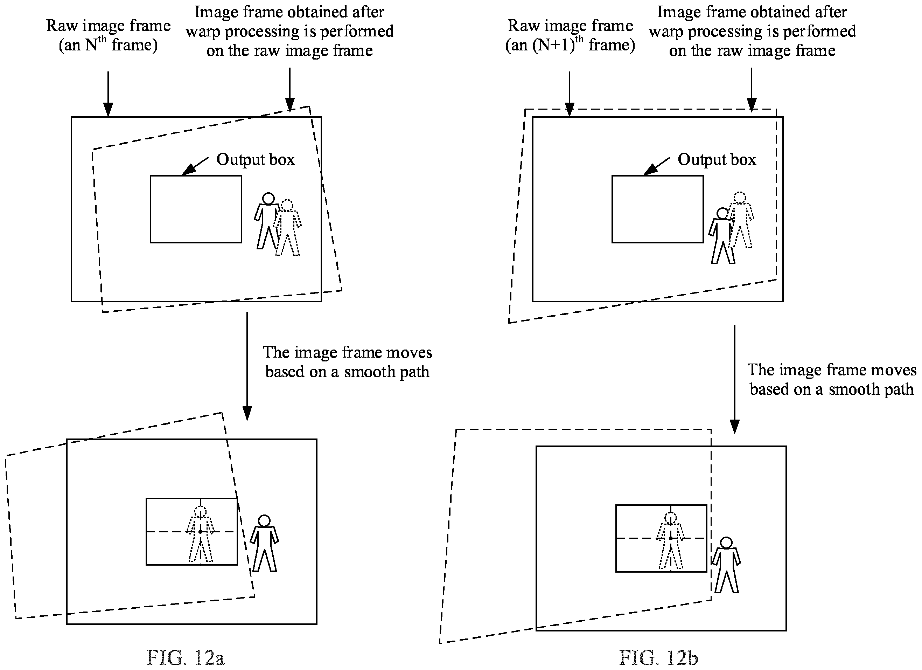

FIG. 12a shows an implementation effect obtained after an image frame (an N^{th} frame) captured by the electronic device 100 moves based on a smooth path. The electronic device 100 captures a raw image frame (the N^{th} frame), and the raw image frame includes a person (represented by a solid line). In this case, when no displacement guide line (difference polyline) participates in background smoothing, a smooth path of a background is near an original path, and the person cannot be displayed in an output box. When the electronic device 100 enters a target tracking mode, the electronic device 100 tracks the person based on the captured raw image frame. When the electronic device receives an instruction for tracking the person, the electronic device 100 warps the raw image frame. A dashed-line box shows an image frame obtained through warping the raw image frame. The dashed-line box also includes a person (represented by a dashed line), which corresponds to the person in the raw image frame. The electronic device 100 moves the image frame indicated by the dashed-line box based on the smooth path obtained through solution in step S104, so that the person can be moved to the output box, and smooth tracking of the person can be implemented.

Similarly, as shown in FIG. 12b, the electronic device 100 captures an (N+1)^{th} frame of image, and the electronic device 100 warps the (N+1)^{th} frame of image. A dashed-line box shows an image frame obtained through warping the (N+1)^{th} frame of image. The electronic device 100 moves the image frame indicated by the dashed-line box based on the smooth path obtained through solution in step S104, so that the person can be moved to the output box, and smooth tracking of the person can be implemented. In FIG. 12a and FIG. 12b, it can be learned that, positions of the person in the N^{th} frame of image and the (N+1)^{th} frame of image in the output box are the same, that is, the preset guide point of the electronic device 100 is located at a position of the current person in the output box.

In this embodiment of this application, the electronic device 100 drives the background motion by using a motion of the target subject, so that the target subject moves to an output picture. Solution on the smooth path of the background takes both image stabilization smoothing and tracking into account, so that tracking of the target subject and path smoothing of the background share a same widest cropping boundary (that is, a boundary of the raw image data). In this way, image stabilization space is not limited, and a tracking effect can be provided at a lower field of view, to avoid a problem that a subject visible on the raw image is difficult to be tracked due to a smaller cropping boundary.

In addition, in the method that needs to run on a mobile phone in real time, a large amount of future frame information cannot be obtained and an optimal path of a current frame cannot be provided based on an image stream motion path of a future frame. In particular, in a photographing preview mode of Camera, image information of only a limited quantity (for example, two) of future frames can be obtained.

Generally, the image frame captured by the electronic device 100 is N+2 frames, and the picture displayed in the display area by the electronic device 100 in real time is the N^{th} frame of image captured by the electronic device 100, where N is a positive integer. Currently, because image stabilization and target tracking are two separate algorithms, if the electronic device 100 wants to perform image stabilization and target tracking, the electronic device 100 first implements image stabilization processing on the N frames of images based on the N+2 frames of images, and then the electronic device 100 can track the target subject only based on the N frames of images. In other words, the electronic device 100 can track the target subject by using only the N frames of images. As a result, the output picture cannot be displayed to the N^{th} frame, resulting in a delay of the output picture.

In this embodiment of this application, tracking of the target subject and image stabilization of the background path are directly solved in parallel, so that smooth windows of image stabilization and tracking can share future frame information, and tracking performance and stability are better implemented.

In some embodiments, the electronic device 100 may capture a raw image by using a telephoto camera, or may capture an image by using a wide-angle camera, that is, an image captured by the electronic device 100 is a wide-angle image with a larger field of view. The electronic device 100 performs subject identification on the captured image based on the wide-angle image by using a target detection algorithm, and determines a target subject. In this way, a wide-angle image with a larger field of view is obtained, so that a larger range of tracking can be implemented.

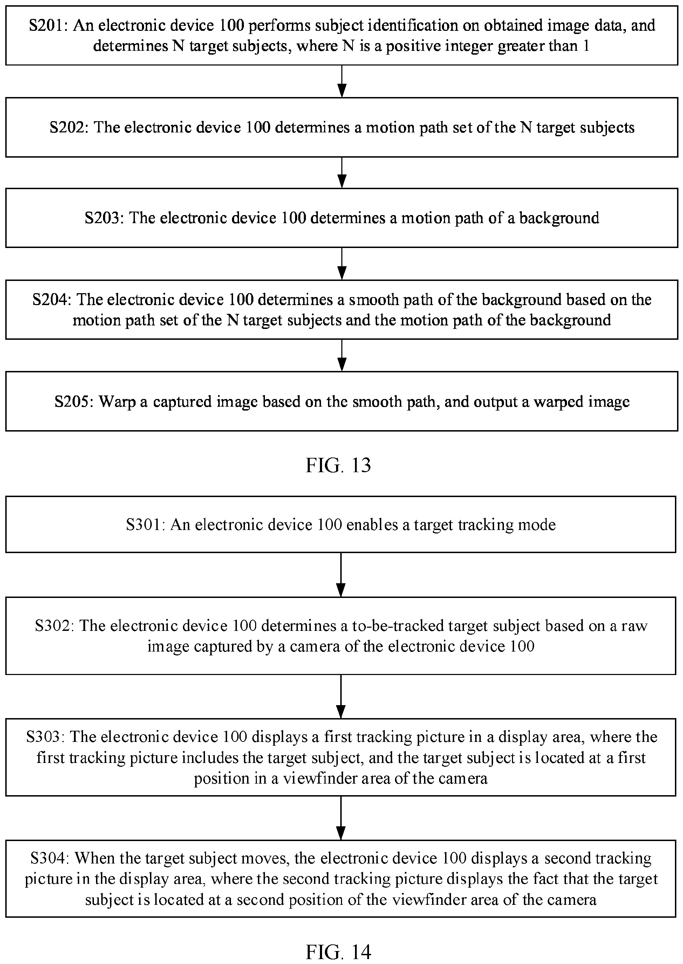

The foregoing embodiment describes a manner in which the electronic device 100 tracks a target subject when the electronic device 100 identifies the target object. The following embodiment of this application describes a manner of tracking a plurality of target subjects when the electronic device 100 identifies that an image captured by a camera includes the plurality of target objects. FIG. 13 is a method flowchart of another target tracking method according to an embodiment of this application. The target tracking method may include the following steps.

S201: The electronic device 100 performs subject identification on obtained image data, and determines N target subjects, where N is a positive integer greater than 1.

The electronic device 100 obtains image data. The electronic device 100 may obtain image data captured by using a camera in real time, or may obtain image data sent by another device, or may obtain image data stored in the electronic device 100. Then, the electronic device 100 performs subject identification on the obtained image data according to a target detection algorithm, and determines the N target subjects. Alternatively, the electronic device 100 may determine the N target subjects based on a received user operation.

In some embodiments, the electronic device 100 captures the image data in real time by using the camera, and performs subject identification on the captured image data. The electronic device 100 performs target detection on a captured image by using the target detection algorithm, to obtain a plurality of target objects in the image. The plurality of target objects may be a person, an animal, an article, a building, or the like. The electronic device 100 determines the N target subjects from the plurality of target objects. The electronic device 100 may determine the N target subjects from the plurality of target objects according to a preset rule. For example, the preset rule may be a target object that is closest to a center position and a target object that is second closest to the center position in a currently captured image; or the preset rule may be a target object that occupies a largest image area and a target object that occupies a second largest image area in a currently captured image; or the like.

In some embodiments, after detecting the plurality of target objects in the image, the electronic device 100 provides selection icons of the plurality of target objects for a user on a display interface. The electronic device 100 receives a user operation performed by the user on the selection icons of the plurality of target objects, parses a tap position of the user operation, and determines the N target subjects. For example, when the user separately taps selection icons corresponding to two target objects, the electronic device 100 determines that the two objects are two target subjects.

It should be noted that, the electronic device 100 performs subject identification on the captured image data, and a remaining part in the captured image data other than the target subject part is considered as a background part.

S202: The electronic device 100 determines a motion path set of the N target subjects.

After performing subject identification and determining the N target subjects, the electronic device 100 determines a motion path of each of the N target subjects. For how to determine the motion path of the target subject, refer to the related description in step S102. Details are not described herein again.

The electronic device 100 determines the motion path of each of the N target subjects, and obtains the motion path set of the target subjects. The motion path set includes the motion path of each of the N target subjects.

S203: The electronic device 100 determines a motion path of a background.

For a related description of step S203, refer to the description of step S103. Details are not described herein again.

S204: The electronic device 100 determines a smooth path of the background based on the motion path set of the N target subjects and the motion path of the background.

The electronic device 100 determines the smooth path of the background based on the motion path set of the N target subjects and the motion path of the background. The electronic device 100 drives a background motion based on the smooth path, so that stable tracking of the N target subjects can be implemented.

First, the electronic device 100 determines a polyline of a difference between each target subject and a preset guide point based on the motion path set of the N target subjects, that is, determines N difference polylines. In some embodiments, the electronic device 100 performs weighted averaging on the N difference polylines, to obtain a difference polyline that optimizes an average distance between each target subject and the preset guide point.

In some embodiments, the electronic device 100 performs predicted output image scoring on the N difference polylines by using composition scoring, aesthetic scoring, or the like. For example, a more center position of the target subject in an output image indicates a higher score. The electronic device 100 selects a difference polyline with a highest score from the N difference polylines as a determined difference polyline.

In some embodiments, the electronic device 100 scores the N difference polylines based on a position and a size of each target subject on an input image and a size of a final output image. For example, a closer size of the target subject on the input image to the size of the output image indicate a higher score. The electronic device 100 selects a difference polyline with a highest score from the N difference polylines as a determined difference polyline.

Then, the electronic device 100 determines the smooth path based on the difference polyline and the motion path of the background. For how the electronic device 100 determines the smooth path based on the difference polyline and the motion path of the background, refer to the related description in step S104. Details are not described herein again.

S205: The electronic device 100 warps the captured image based on the smooth path, and outputs a warped image.

For a related description of step S205, refer to the description of step S105. Details are not described herein again.

In this embodiment of this application, joint tracking of the plurality of target subjects is implemented by identifying the plurality of target subjects.

FIG. 14 is a step flowchart of a target tracking method according to an embodiment of this application.

Step S301: The electronic device 100 enables a target tracking mode.

For a manner in which the electronic device 100 enables the target tracking mode, refer to related descriptions in FIG. 3b and FIG. 4a.

Step S302: The electronic device 100 determines a to-be-tracked target subject based on a raw image captured by a camera of the electronic device 100.

The electronic device 100 may determine the target subject by using a target detection algorithm, or may determine the target subject by using a received user operation. For a specific manner in which the electronic device 100 determines the to-be-tracked target subject, refer to related descriptions in FIG. 4a and FIG. 4b.

Step S303: The electronic device 100 displays a first tracking picture in a display area, where the first tracking picture includes the target subject, and the target subject is located at a first position in a viewfinder area of the camera.

The first tracking picture may be, for example, the picture shown in FIG. 4b. In this case, the target subject (person) is located at a position (first position) on a left edge of the viewfinder area (the picture displayed in the preview box 221) of the camera.

Step S304: When the target subject moves, the electronic device 100 displays a second tracking picture in the display area, where the second tracking picture displays the fact that the target subject is located at a second position of the viewfinder area of the camera.

The second tracking picture may be, for example, the picture shown in FIG. 4c. In this case, the target subject (person) moves rightwards relative to that in FIG. 4b, and the second position is different from the first position.

In this embodiment of this application, the electronic device 100 may perform target tracking on the captured raw image. After the electronic device 100 determines the target subject in the raw image, when the target subject moves from the first position to the second position, the target subject is always displayed in a picture in the display area of the electronic device 100. Herein, the raw image captured by the camera means all image data that can be captured by the camera. In this embodiment of this application, the target subject is tracked based on the image range of the raw image, so that a larger tracking range is implemented.

In a possible implementation, the electronic device 100 does not move, and the viewfinder area of the camera does not change. In this embodiment of this application, tracking the target subject may be tracking a moving target subject when the electronic device 100 does not move. In this way, stability of displaying the target subject in an output picture can be improved. In this embodiment of this application, when the electronic device 100 moves, a moving target subject may alternatively be tracked, and the target subject is always displayed in an output picture. Alternatively, when the electronic device 100 moves, a target subject that does not move is tracked, and the target subject is always displayed in an output picture.

In a possible implementation, image stabilization or deblurring processing is not performed on the raw image, or the raw image includes all objects in the viewfinder area of the camera. In this embodiment of this application, the target subject is tracked based on the image range of the raw image, so that a larger tracking range is implemented. When the target subject is located in an edge area of the raw image, the electronic device 100 may also track the target subject.

In a possible implementation, the method further includes: The electronic device 100 displays, in a preview box, the raw image captured by the camera. The preview box occupies a part or all of the display area. The preview box may be a picture-in-picture box, and is superimposed and displayed in the display area, so that a user can more intuitively view a comparison between the raw image and a tracking picture in the display area. The preview box may alternatively occupy all pictures of the display area. For example, the preview box is first displayed in all pictures of the display area, and then the preview box is superimposed and displayed in the display area. For example, the preview box may be the preview box 221 shown in FIG. 4a to FIG. 4f.

In a possible implementation, that the electronic device 100 determines a to-be-tracked target subject based on a raw image captured by a camera of the electronic device 100 includes: The electronic device 100 receives a first operation performed by the user in the preview box. The first operation indicates the target subject selected by the user. The electronic device 100 determines the to-be-tracked target subject based on the first operation. If the raw image captured by the camera is displayed in the preview box, the image displayed in the preview box includes the target subject. The electronic device 100 may determine the target subject based on the first operation performed by the user on the preview box. The first operation may be, for example, a tap operation performed on a display position of the target subject. That is, the electronic device 100 may determine the target subject based on a user operation.

In a possible implementation, that the electronic device 100 determines a to-be-tracked target subject based on a raw image captured by a camera of the electronic device 100 includes: The electronic device 100 performs, according to a preset target detection algorithm, automatic target detection on the raw image captured by the camera of the electronic device 100, to determine the to-be-tracked target subject. The preset target detection algorithm may be for a specific type of object, for example, a target detection algorithm for detecting a person, a target detection algorithm for detecting an animal, a target detection algorithm for detecting an object, a target detection algorithm for detecting a moving object, or the like.

In a possible implementation, the preview box further includes an output box, and an image in the output box corresponds to a picture displayed in the display area. The output box indicates a specific area, of the raw image, in which a picture displayed in a current display area is located. For example, the output box may be the dashed-line box 221B in FIG. 4a, may be the solid-line box 221C in FIG. 4b, may be the solid-line box 221D in FIG. 4c, may be the solid-line box 221E in FIG. 4d, may be the solid-line box 221F in FIG. 4e, or may be the solid-line box 221G in FIG. 4f.

In a possible implementation, the method further includes: The electronic device 100 determines a guide point in the output box. The guide point indicates a display position of the target subject. The electronic device 100 displays, based on the guide point, the target subject at the first position in the first tracking picture or the target subject at the second position in the second tracking picture. The guide point is used to determine a display position of the target subject in the output box. If the guide point is at a center point of the output box, in the first tracking picture, the target subject is displayed at a center position of the first tracking picture, and in the second tracking picture, the target subject is displayed at a center position of the second tracking picture. In this way, the electronic device 100 can enable the target subject to be stably displayed at a position of the guide point, to implement an effect of stable tracking. For example, the guide point in FIG. 4a to FIG. 4f is a center point of the output box, and the guide point in FIG. 7a to FIG. 7d is a point on the left of the output box.

In a possible implementation, that the electronic device 100 determines a guide point in the output box includes: The electronic device 100 determines the guide point in the output box according to a default setting, or the electronic device 100 receives a second operation of the user. The second operation of the user indicates a position, in the output box, of the guide point selected by the user. A manner in which the electronic device 100 may determine the guide point by using a default setting and a user operation is provided herein.

In a possible implementation, that the electronic device 100 displays, based on the guide point, the target subject at the first position in the first tracking picture or the target subject at the second position in the second tracking picture includes: The electronic device 100 determines a motion path of the target subject. The electronic device 100 determines a polyline of a difference between the target subject and the guide point based on the motion path of the target subject. The electronic device 100 determines a motion path of a background in the raw image. The electronic device 100 determines a smooth path based on the motion path of the background and the difference polyline. The electronic device 100 warps the raw image based on the smooth path. The electronic device 100 displays a warped image in the display area. A picture displayed in the display area corresponds to an image in the output box. An algorithm principle for the electronic device 100 to implement stable tracking of the target subject is described herein. Based on a concept of a foreground driving the background, the electronic device 100 drives a background motion by using a motion of the target subject, so that the target subject moves to an output picture. In a process of solving the smooth path of the background, the electronic device 100 determines a polyline of a difference between the motion path of the target subject and the guide point, and uses the difference polyline as a guide reference item for smoothing the background, to obtain the smooth path of the background. The raw image captured by the electronic device 100 is warped based on the smooth path, so that the target subject can be stably displayed at the position of the guide point in the output box. One-time solution performed by the electronic device 100 on the smooth path of the background takes both image stabilization smoothing and tracking into account, so that tracking of the target subject and path smoothing of the background share a same widest cropping boundary (that is, a boundary of the raw image). This implements tracking of the target subject and smoothing of the background, and takes followability and smoothness of a tracking result into account.

In a possible implementation, that an electronic device 100 enables a target tracking mode includes: The electronic device 100 detects a third operation of the user. The third operation includes an operation of increasing a zoom ratio or an operation that the user directly turns on a target tracking mode switch. A manner in which the electronic device 100 enables the target tracking mode based on a user operation is provided herein.

In a possible implementation, the operation of increasing a zoom ratio indicates a display ratio selected by the user, and the electronic device 100 displays the first tracking picture or the second tracking picture in the display area based on the display ratio.

In a possible implementation, the camera is a telephoto camera. Generally, at a high display ratio, the electronic device 100 captures image data by using a telephoto camera.

In a possible implementation, an increased zoom ratio is greater than a preset ratio. The preset ratio may be, for example, 15X.

In a possible implementation, when the second position is an edge position of the viewfinder area of the camera, the second tracking picture includes the target subject. One-time solution performed by the electronic device 100 on the smooth path of the background takes both image stabilization smoothing and tracking into account, so that tracking of the target subject and path smoothing of the background share a same widest cropping boundary (that is, a boundary of the raw image). In this way, even if the target subject is located at an edge position in the raw image, the electronic device 100 can also track the target subject. This resolves a problem that because the target subject is located at an edge of an image shooting area of the electronic device 100, the electronic device 100 cannot track the target subject even if an image of the target subject is captured.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the processes of the methods in embodiments may be implemented by a computer program instructing related hardware. The program may be stored in a computer-readable storage medium. When the program is run, the processes of the methods in embodiments are performed. The foregoing storage medium includes any medium that can store program code, such as a ROM, a random access memory RAM, a magnetic disk, or an optical disc.

## Claims

1. A target tracking method, wherein the method comprises:
enabling, by an electronic device, a target tracking mode;
determining, by the electronic device, a to-be-tracked target subject based on a raw image captured by a camera of the electronic device;
displaying, by the electronic device, a first tracking picture in a display area, wherein the first tracking picture comprises the target subject, and the target subject is located at a first position in a viewfinder area of the camera; and
when the target subject moves, displaying, by the electronic device, a second tracking picture in the display area, wherein the second tracking picture displays the fact that the target subject is located at a second position of the viewfinder area of the camera.

2. The method according to claim 1, wherein the electronic device does not move, and the viewfinder area of the camera does not change.

3. The method according to claim 1, wherein image stabilization or deblurring processing is not performed on the raw image, or the raw image comprises all objects in the viewfinder area of the camera.

4. The method according to any one of claims 1 to 3, wherein the method further comprises:
displaying, by the electronic device in a preview box, the raw image captured by the camera, wherein the preview box occupies a part or all of the display area.

5. The method according to claim 4, wherein the determining, by the electronic device, a to-be-tracked target subject based on a raw image captured by a camera of the electronic device comprises:
receiving, by the electronic device, a first operation performed by a user in the preview box, wherein the first operation indicates the target subject selected by the user; and determining, by the electronic device, the to-be-tracked target subject based on the first operation.

6. The method according to claim 4, wherein the determining, by the electronic device, a to-be-tracked target subject based on a raw image captured by a camera of the electronic device comprises:
performing, by the electronic device according to a preset target detection algorithm, automatic target detection on the raw image captured by the camera of the electronic device, to determine the to-be-tracked target subject.

7. The method according to claim 4, wherein the preview box further comprises an output box, and an image in the output box corresponds to a picture displayed in the display area.

8. The method according to claim 7, wherein the method further comprises:
determining, by the electronic device, a guide point in the output box, wherein the guide point indicates a display position of the target subject; and
displaying, by the electronic device based on the guide point, the target subject at the first position in the first tracking picture or the target subject at the second position in the second tracking picture.

9. The method according to claim 8, wherein the determining, by the electronic device, a guide point in the output box comprises:
determining, by the electronic device, the guide point in the output box according to a default setting, or receiving, by the electronic device, a second operation of a user, wherein the second operation of the user indicates a position, in the output box, of the guide point selected by the user.

10. The method according to claim 8, wherein the displaying, by the electronic device based on the guide point, the target subject at the first position in the first tracking picture or the target subject at the second position in the second tracking picture comprises:
determining, by the electronic device, a motion path of the target subject;
determining, by the electronic device, a polyline of a difference between the target subject and the guide point based on the motion path of the target subject;
determining, by the electronic device, a motion path of a background in the raw image;
determining, by the electronic device, a smooth path based on the motion path of the background and the difference polyline;
warping, by the electronic device, the raw image based on the smooth path; and
displaying, by the electronic device, a warped image in the display area, wherein a picture displayed in the display area corresponds to an image in the output box.

11. The method according to any one of claims 1 to 10, wherein the enabling, by an electronic device, a target tracking mode comprises:
detecting, by the electronic device, a third operation of the user, wherein the third operation comprises an operation of increasing a zoom ratio or an operation that the user directly turns on a target tracking mode switch.

12. The method according to claim 11, wherein the operation of increasing a zoom ratio indicates a display ratio selected by the user, and the electronic device displays the first tracking picture or the second tracking picture in the display area based on the display ratio.

13. The method according to claim 12, wherein the camera is a telephoto camera.

14. The method according to claim 11 or 12, wherein an increased zoom ratio is greater than a preset ratio.

15. The method according to any one of claims 1 to 14, wherein when the second position is an edge position of the viewfinder area of the camera, the second tracking picture comprises the target subject.

16. An electronic device, comprising one or more processors and one or more memories, wherein the one or more memories are respectively coupled to the one or more processors, the one or more memories are configured to store computer program code, the computer program code comprises computer instructions, and when the computer instructions are run on the processor, the electronic device is enabled to perform the method according to claims 1 to 15.

17. A computer-readable medium, configured to store one or more programs, wherein the one or more programs are configured to be executed by one or more processors, the one or more programs comprise instructions, and the instructions are used to perform the method according to claims 1 to 15.

18. A target tracking method, wherein the method comprises:
starting target tracking;
capturing a raw image;
determining a to-be-tracked target subject based on the raw image;
outputting information about a first tracking picture, wherein the first tracking picture comprises the target subject, and the target subject is located at a first position of a viewfinder area; and
outputting information about a second tracking picture, wherein the second tracking picture displays the fact that the target subject is located at a second position of the viewfinder area.

19. A camera module, comprising an input unit, an output unit, and at least one camera, wherein
the input unit is configured to start target tracking based on an indication of an electronic device;
the at least one camera is configured to: capture a raw image, and determine a to-be-tracked target subject based on the raw image; and
the output unit is configured to: output information about a first tracking picture, wherein the first tracking picture comprises the target subject, and the target subject is located at a first position of a viewfinder area; and output information about a second tracking picture, wherein the second tracking picture displays the fact that the target subject is located at a second position of the viewfinder area.
